(19) Europäisches Patentamt
European Patent Office
Office européen des brevets

(11) **EP 3 245 047 B1**

(12) **EUROPÄISCHE PATENTSCHRIFT**

(45) Veröffentlichungstag und Bekanntmachung des Hinweises auf die Patenterteilung:
**31.10.2018 Patentblatt 2018/44**

(21) Anmeldenummer: **17700273.0**

(22) Anmeldetag: **10.01.2017**

(51) Int Cl.:
**B29C 67/00** (2017.01)          **C08L 83/04** (2006.01)
**C08L 83/14** (2006.01)

(86) Internationale Anmeldenummer:
**PCT/EP2017/050426**

(87) Internationale Veröffentlichungsnummer:
**WO 2017/121733 (20.07.2017 Gazette 2017/29)**

(54) **VERNETZBARE SILICONZUSAMMENSETZUNGEN ZUR HERSTELLUNG HOCHTRANSPARENTER FORMTEILE MITTELS BALLISTISCHER VERFAHREN**

CROSS-LINKABLE SILICONE COMPOSITIONS FOR PRODUCING HIGHLY TRANSPARENT MOLDED PARTS BY MEANS OF BALLISTIC METHODS

COMPOSITIONS DE SILICONE RÉTICULABLES DESTINÉES À LA FABRICATION DE PIÈCES FAÇONNÉES HAUTEMENT TRANSPARENTES AU MOYEN D'UN PROCÉDÉ DE FABRICATION PAR JETS MULTIPLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.01.2016 PCT/EP2016/050405**

(43) Veröffentlichungstag der Anmeldung:
**22.11.2017 Patentblatt 2017/47**

(73) Patentinhaber: **Wacker Chemie AG**
**81737 München (DE)**

(72) Erfinder:
• **ACHENBACH, Frank**
**84359 Simbach (DE)**

• **SELBERTINGER, Ernst**
**84489 Burghausen (DE)**

(74) Vertreter: **Bitterlich, Bianca et al**
**Wacker Chemie AG**
**Intellectual Property**
**Hanns-Seidel-Platz 4**
**81737 München (DE)**

(56) Entgegenhaltungen:
**WO-A1-2012/166870          WO-A1-2014/018814**
**WO-A1-2015/107333          US-A1- 2009 225 640**

**Beschreibung**

Die Erfindung betrifft vernetzbare Siliconzusammensetzungen, deren erfindungsgemäße Eigenschaften die Herstellung hochtransparenter Formkörper mittels ballistischer generativer Verfahren (3D-Druck) ermöglichen.

**Stand der Technik**

Für die Herstellung von Formteilen ausgehend von vernetzbaren Siliconzusammensetzungen stehen zahlreiche Verfahren zur Verfügung. Je nach Konsistenz und Vernetzungsmechanismus der Siliconzusammensetzung kann die Herstellung von Formteilen z.B. im Spritzguss, im Pressformverfahren, im Extrusionsverfahren, durch Kalandrieren, Vergießen etc. erfolgen. Diese konventionellen Verarbeitungsverfahren stoßen jedoch zunehmend an ihre Grenzen, wenn Siliconformteile komplexerer Geometrie, unterschiedlicher Materialzusammensetzung und/oder variabler Eigenschaftsprofile benötigt werden. Der allgemeine Trend hin zur Individualisierung und individuellen Anpassung von Gebrauchsartikeln bedingt zudem kleinere Stückzahlen, die Notwendigkeit einer raschen Verfügbarkeit und eine einfache Umstellung auf neue Produkt-Serien, wodurch die Effizienz konventioneller Verfahren nicht mehr gegeben ist.

Ein zunehmend an Bedeutung gewinnendes Verfahren zur Herstellung von Formteilen ist das generative Fertigungsverfahren (*Additive Manufacturing*; 3D-Druck Verfahren), welches zahlreiche unterschiedliche Techniken umfasst, denen ein automatisierter additiver Schichtaufbau des Formteils gemeinsam ist (A. Gebhardt, Generative Fertigungsverfahren, Carl Hanser Verlag, München 2013). Das Generative Fertigungsverfahren bietet nicht nur die Möglichkeit, die oben genannten Unzulänglichkeiten der konventionellen Verarbeitungsverfahren zu vermeiden, sondern ermöglicht ein grundlegend neuartiges Design von Formartikeln.

Der additive schichtweise Aufbau des Formteils kann erfolgen, indem eine aufgebrachte Schicht des vernetzbaren Materials ortsselektiv vernetzt wird. Die ortsselektive Vernetzung kann beispielsweise mittels eines UV- oder IR-Lasers erfolgen. Eine ortsselektive Vernetzung kann auch herbeigeführt werden, indem ein die Vernetzung initiierendes Agens (z.B. Katalysator) ortgenau durch Injektion, Jetting, Sprühen etc. aufgebracht wird, wie für die Herstellung von Siliconelastomerteilen beschrieben in WO2015/059502 A1.

Ortsselektive Vernetzung bedeutet, dass nur jenes Material der Schicht vernetzt wird, welches den späteren Formartikel bildet; das nichtvernetzte Material wird letztlich entfernt und kann ggf. wiederverwendet werden. Ein additiver schichtweiser Aufbau des Formteils kann jedoch auch dadurch erfolgen, indem das vernetzbare Material ortsselektiv aufgebracht wird (z.B. mittels eines Druckkopfes in Form diskreter Tröpfchen), d.h. nur an jenen Stellen, die Bestandteil des zu bildenden Formkörpers werden. Die auf diese Weise aufgebrachte Schicht wird im Allgemeinen nicht geschlossen sein, sondern unmittelbar einen Querschnitt des gewünschten Formkörpers abbilden. Die ortsselektiv aufgebrachte Masse wird anschließend vernetzt (z.B. durch flächige Bestrahlung) und die nächste Schicht wird ortsselektiv aufgebracht usw. Falls es die Form des zu druckenden Teiles erforderlich macht (z.B. bei überhängenden Strukturen, Hohlräumen etc.), kann zusätzlich zum vernetzbaren Siliconmaterial ein geeignetes Stützmaterial aufgebracht werden, welches nach Beendigung des Druckvorgangs wieder entfernt werden kann (z.B. durch Aufschmelzen oder Herauslösen mittels eines Lösungsmittels). Das ortsselektive Aufbringen der vernetzbaren Masse kann z.B. durch diskontinuierliches (diskretes) Jetten von Tröpfchen (so genannte ballistische Verfahren) oder durch kontinuierliches Dispensen dünner Stränge erfolgen. Grundsätzlich ermöglicht das Jetten im Vergleich zum Dispensen das Drucken feinerer struktureller Details sowie komplexerer Strukturen. Der Vorteil des Dispensens besteht in der Möglichkeit, größere Materialmengen pro Zeiteinheit aufbringen zu können. Zusätzlich ermöglicht das Dispensen auch höherviskose Materialien aufzubringen, so dass es von Vorteil sein kann, beide Techniken dadurch zu kombinieren, indem im 3D-Drucker zusätzlich zu der (oder den) Jetting-Druckdüse(n) auch eine oder ggf. mehrere Dispens-Düsen angebracht werden. Auf diese Weise können z.B. filigrane Teile des Formkörpers mittels der Jetting-Düse aufgebaut werden und größer volumige Teile des Formkörpers durch Dispensen gedruckt werden. Hinsichtlich der rheologischen Anforderungen, welche das Jetten bzw. Dispensen an das zu druckende Material stellen, erweist sich das Jetting als wesentlich anspruchsvoller.

WO2015/107333 A1 beschreibt ein 3D-Druck-Verfahren zur Herstellung von Prothesen aus Siliconelastomeren durch (kontinuierliche) Extrusion der vernetzungsfähigen Siliconkautschukzusammensetzung aus einer Mischdüse. Der 3D-Druck wird ggf. unterstützt durch eine zweite Mischdüse zur Extrusion eines thermoplastischen Materials, welches als Stützmaterial für die zu druckende Siliconkautschukzusammensetzung dient. Die Vernetzung der Siliconkautschukzusammensetzung erfolgt durch platinkatalysierte Additionsreaktion bei Raumtemperatur (Hydrosilylierung). Nachteilig an diesem Verfahren ist die für den Druck feiner Details nicht erreichbare, ortsgenaue Platzierung kleinster Mengen der Siliconkautschukzusammensetzung. Des Weiteren lässt sich der Vernetzungszeitpunkt nach dem Vermischen der beiden Kautschukkomponenten nicht mehr beeinflussen, was u.a. den Nachteil hat, dass im Verlauf des Druckvorgangs sehr unterschiedlich stark vernetzte Bereiche der Siliconkautschukzusammensetzung in Kontakt gebracht werden (wenn die Verarbeitungszeit der Kautschukmasse kürzer als die Druckzeit ist) oder dass die Tragfähigkeit der gedruckten Struktur nicht gegeben ist (Verarbeitungszeit länger als Druckzeit).

Eine spezielle Ausführungsform des generativen Fertigungsverfahren stellen die ballistischen Verfahren dar, welche sich dadurch auszeichnen, dass das ortsselektive Aufbringen der vernetzbaren Masse mit Hilfe eines Druckkopfes in Form einzelner Tröpfchen (Voxel) erfolgt (*Jetting; Inkjet printing*). Die aufgebrachte Masse kann nachfolgend z.B. mittels elektromagnetischer Strahlung vernetzt werden, wodurch eine dünne Schicht des Formteils gebildet wird. Dieser Vorgang des schichtweisen Aufbaus wiederholt sich solange, bis der vollständige Formkörper gebildet ist.

Bei den ballistischen Verfahren (Jetting) unterscheidet man grundsätzlich zwischen dem kontinuierlichen inkjet (CIJ) printing und dem drop-on-demand (DOD)inkjet printing. Beide Methoden können Tröpfchen mit Durchmessern von 10 µm bis zu einigen hundert µm erzeugen.

Im CIJ-Verfahren wird ein kontinuierlicher Strom an Tröpfchen erzeugt, indem das Material unter hohem Druck aus einer Düse ausgestoßen wird und der entstehende Flüssigkeitsstrahl infolge Rayleigh Instabilität zu Einzeltröpfchen zerfällt. Die elektrostatisch aufgeladenen Tröpfchen werden mittels elektrischer Ablenkplatten so dirigiert, dass diese entweder ortsgenau auf die Arbeitsebene (Substrat) gelangen oder (falls kein Druck erfolgen soll), in eine Rückflussrinne gelangen, durch welche sie der Wiederverwendung zugeführt werden können. Diese Rückführung des zu druckenden Materials weist im Fall von vernetzbaren Siliconkautschukzusammensetzungen neben dem Kontaminationsrisiko die gravierende Gefahr einer massiven Veränderung der rheologischen Eigenschaften infolge beginnender Vernetzung auf und ist daher nicht praktikabel.

Hingegen werden im DOD-Verfahren nur bei Bedarf Tröpfchen erzeugt, die sämtlich zum Aufbau des Formteils ortsselektiv abgeschieden werden, entweder indem ein Positionierroboter die Jetting-Düse in x,y,z-Richtung exakt positioniert, oder die Arbeitsebene entsprechend in x,y,z-Richtung verfahren wird; prinzipiell lassen sich beide Möglichkeiten auch simultan realisieren.

DE 10 2011 012 412 A1 und DE 10 2011 012 480 A1 beschreiben eine Vorrichtung sowie ein Verfahren zur schrittweisen Herstellung von 3D-Strukturen mit einer Druckkopfanordnung mit wenigstens zwei, vorzugsweise 50 bis 200 Druckkopfdüsen, welche das ortsselektive Aufbringen ggf. mehrerer photovernetzbarer Materialien mit unterschiedlicher Photoempfindlichkeit ermöglicht, wobei die photovernetzbaren Materialien anschließend ortsselektiv durch elektromagnetische Strahlung, insbesondere durch Zweiphotonen- oder Mehrphotonenprozesse im Fokusbereich eines Lasers, verfestigt werden. Das Aufbringen der photovernetzbaren Materialien mittels Inkjetdruck stellt an die Viskosität der photovernetzbaren Materialien spezielle Anforderungen. So zeichnen sich die photovernetzbaren Materialien durch eine Viskosität von weniger als 200 mPa·s, insbesondere weniger als 80 mPa·s, besonders bevorzugt weniger als 40 mPa·s aus. Um eine ausreichende Vernetzung des aufgebrachten Materials mittels Zwei- bzw. Mehrphotonenpolymerisation zu erzielen, bedarf es auf die Laserwellenlänge abgestimmter Photoinitiatoren und einer photovernetzbare Gruppen enthaltenden polymeren VernetzerKomponente, wobei die photovernetzbaren Gruppen der Klasse der Acrylate, Methacrylate, Acrylamide, Methylacrylamide, Urethanacrylate, Urethanmethacrylate, Ureaacrylate und Ureamethacrylate angehören. Das beschriebene Verfahren eignet sich jedoch nicht zur Herstellung von hochtransparenten Formteilen bestehend aus vernetzten Siliconen. Zum einen sind die verwendeten Photoinitiatoren, Photosensitizer, Coinitiatoren etc. in den (unpolaren) Siliconmassen nur schlecht löslich, was zu Trübungen, Mikrophasenseparation und Inhomogenitäten führt. Die radikalische Härtung von mit den voranstehend genannten photovernetzbaren Gruppen funktionalisierten Siliconen weist bekanntermaßen das Problem der durch Sauerstoff verursachten Inhibierung auf, wodurch die Vernetzungsgeschwindigkeit erheblich herabgesetzt wird und klebrige Oberflächen resultieren. Steuert man diesem Effekt durch Erhöhung der Funktionsdichte an z.B. Acrylatgruppen entgegen, resultieren nichtelastische, spröde Vulkanisate. Schließlich setzt die für eine Mehrphotonenpolymerisation (insbesondere bedingt durch die niedrige Funktionsdichte an photopolymerisierbaren Gruppen) benötigte, durch gepulste Femtosekundenlaser erzeugte extrem hohe lokale Photonendichte Zersetzungsreaktionen (Carbonisierung) im Silicon in Gang, was zu inaktzeptablen Verfärbungen und Materialschädigungen führt.

Im DOD-Verfahren hängt die Auflösung struktureller Details des zu bildenden Formkörpers vor allem von der Größe der gejetteten Tröpfchen (Voxel) sowie deren ortsgenaue Aufbringung ab. Im Allgemeinen lassen sich mittels kleinerer Tröpfchen feinere strukturelle Details erzeugen. Da die Frequenz, mit welcher der Druckkopf die Tröpfchen erzeugt, begrenzt ist, führt die Verwendung kleinerer Tröpfchen jedoch zwangsläufig zu längeren Herstellungszeiten des Formteiles, so dass im Einzelfall ein Kompromiss zwischen Formgenauigkeit und Herstelldauer getroffen werden muss. Die Größe der Tröpfchen, die in weiten Grenzen durch geeignete Auslegung des Druckkopfes variiert werden kann, hängt jedoch maßgeblich von den rheologischen Eigenschaften der vernetzbaren Masse ab. Generell gilt, dass niedrigviskose Massen das Jetten kleinerer Tröpfchen mit höherer Frequenz erlauben, während höherviskose Massen die gegenwärtig verfügbaren Druckköpfe rasch an ihre Grenze bringen.

Eine genauere Betrachtung des DOD-Verfahrens zeigt, dass ein befriedigendes Druckbild (also ein maßgenaues Formteil) nur dann erhalten wird, wenn die technischen Parameter des Druckkopfes mit den insbesondere rheologischen Eigenschaften des zu druckenden Materials kompatibel sind. Wesentliche technische Parameter des Druckkopfes sind die Druckdifferenz zwischen Materialreservoir und Düsenausgang, der Düsendurchmesser sowie die Zeit, innerhalb derer die gesamte Menge eines Tropfens die Düse verlässt (ejection time). Als Druckköpfe kommen insbesondere (thermische) Bubble-Jet- und Piezo-Druckköpfe in Frage, wobei für den Druck von Siliconformteilen Piezo-Druckköpfe besonders bevorzugt sind, welche auch höherviskose Materialien jetten können. Diese sind kommerziell erhältlich (z.B. Druckköpfe der Firmen "NORDSON CORP./USA" und "VERMES MICRODISPENSING GMBH/Deutschland"). Diese Piezo-Druckköpfe ermöglichen einen Druckaufbau im kbar-Bereich, wodurch Flüssigkeitsmengen im pl- bis nl-Bereich innerhalb von 1-100 $\mu$s durch eine Düse mit Durchmessern zwischen 50 und 500 $\mu$m mit einer Geschwindigkeit von 1-100 m/s ausgestoßen werden können. Dieser Vorgang wiederholt sich mit einer Frequenz von bis zu einigen hundert Hz (dies sind typische Größenbereiche, die im Einzelfall erheblich abweichen können). Neben diesen technischen Parametern der Druckventile erweisen sich die rheologischen Eigenschaften des zu druckenden Materials als entscheidend. Auch wenn die Hersteller der Druckventile verarbeitbare Viskositäten von bis zu ca. 2 Mio mPa·s (bei niedriger Scherrate) vorgeben, können derart hochviskose Materialien in der Regel nur bei extrem scherverdünnendem Verhalten gejettet werden. Scherverdünnendes Verhalten (*shear thinning*) bedeutet, dass die Viskosität des Materials mit zunehmender Scherrate abnimmt. Da beim Jetten mit Piezo-Druckköpfen außerordentlich hohe Scherraten zwischen $10^5$ und $10^6$ s$^{-1}$ in der Düse auftreten, kann scherverdünnendes Verhalten eine drastische Verringerung der Viskosität während des Jettens um mehrere Größenordnungen bewirken, wodurch ein Jetten erst möglich wird. Ist das scherverdünnende Verhalten eines hochviskosen Materials zu niedrig, reicht die Energie des Piezo-Druckventils nicht aus, um das Material durch die Düse zu pressen und der Druckkopf blockiert (*blocking*). Es ist wichtig festzustellen, dass das Material die Düse nicht als fertiger Tropfen verlässt, sondern ein Tropfenbildungsvorgang abläuft. Das Material verlässt die Düse zunächst laminar strahlförmig, wobei sich rasch am Kopfende eine ovale Verdickung (Vorläufer des Haupttropfens) herausbildet, die jedoch noch über einen dünneren Materialfaden mit dem Düsenausgang verbunden bleibt. Nachfolgend sind vielfältige Szenarien möglich. Reißt der Materialfaden am Düsenausgang ab und vereinigt sich nachfolgend mit dem Haupttropfen, so entsteht ein einziger Tropfen, dessen Geschwindigkeit sich aufgrund des elastischen Vereinigungsvorgangs deutlich verlangsamt. Reißt der Materialfaden hingegen sowohl am Düsenausgang als auch am Haupttropfen ab, so kann sich durch elastisches Zusammenziehen ein zweiter Tropfen (Satellit) bilden. Satellit und Haupttropfen können nacheinander auf der Substratoberfläche (Arbeitsebene) auftreffen, können sich aber auch während der Flugphase noch zu einem einzigen Tropfen vereinen. Der abgerissene Materialfaden kann sich jedoch auch an mehreren Stellen verjüngen und schlussendlich mehrere Satellitentropfen bilden, die alle nacheinander auf dem Substrat auftreffen können oder sich noch während der Flugphase mit dem Haupttropfen vereinigen. Um Letzteres zu ermöglichen, ist ein bestimmter Mindestabstand des Düsenausgangs von der Arbeitsebene notwendig. Andererseits wird die ortsgenaue Deponierung des Tropfens mit zunehmender Flugdauer nachteilig beeinflusst, weshalb in der Praxis ein optimaler Abstand zwischen Düse und Substrat ausfindig gemacht werden muss, welcher typischerweise im Bereich einiger weniger Millimeter liegt.

Reißt der Materialfaden nicht unmittelbar am Düsenausgang ab (was maßgeblich von der zwischen Düsenmaterial und Druckmaterial bestehenden Grenzflächenspannung bestimmt wird), so zieht sich der am Düsenausgang verbliebene Teil des Materialfadens zusammen und verklebt in der Folge die Düse, was zum Ausfall des Druckkopfes führt. Bedenkt man des Weiteren, dass der Verfahrroboter, welcher den Druckkopf in der x,y-Ebene positioniert, die x,y-Ebene kontinuierlich abfährt (also ohne Halt an den einzelnen Punkten (x,y)), so wird verständlich, dass die Bildung von Satelliten zwangsläufig zu einem unscharfen Druckbild führt, da sich die Druckdüse bis zum Zeitpunkt des Abreißens des Materialfadens am Düsenausgang bereits in Richtung des nächsten (x,y) Punktes weiterbewegt hat (typische Geschwindigkeiten der Verfahreinheit liegen zwischen 0,1 und 1 m/s).

Der auf der Arbeitsebene mit hoher Geschwindigkeit auftreffende Tropfen kann sich ebenfalls auf unterschiedliche Weise verhalten. Er kann beispielsweise zu einem kugelsegment-, kegel- oder Donat-artigen Gebilde verformt werden, wobei die meist kreisförmige Grundfläche dieses Gebildes infolge des Auseinanderfließens des Tropfens einen größeren Durchmesser als die Düse bzw. des Tropfens aufweist. Der Tropfen kann beim Auftreffen auch ein kronenartiges Gebilde formen, welches unmittelbar anschließend winzige Tröpfchen in radialer Richtung verspritzt (splashing). Auch dieses Splashing führt zu einem unsauberen Druckbild. Der platzierte Tropfen kann infolge der extrem hohen Scherrate in der Düse infolge langsamer Relaxation eine noch sehr niedrige Viskosität aufweisen und zu stark auseinanderfließen. Andererseit kann eine zu schnelle Relaxation in die hohe Ausgangsviskosität bei Vorhandensein einer Fließgrenze zu spitzhütigen Tröpfchengebilden führen, die mangels einer ausreichenden Nivellierung eine rauhe Oberfläche bilden. Rheologisch dilatantes Verhalten des Tropfens kann sogar zu einem Rückprallen des aufgeschlagenen Tropfens führen. Aus dem Voranstehenden ist für den Fachmann ersichtlich, dass nur durch die genaue Abstimmung der technischen Parameter des Druckkopfes mit den rheologischen und Grenzflächeneigenschaften des Druckmaterials die Herstellung qualitativ hochwertiger Formartikel möglich ist. Im Fall der Herstellung von Formteilen ausgehend von Siliconzusammensetzungen mittels ballistischer 3D-Druckverfahren kommen einige zusätzlich erschwerende Randbedingungen hinzu. Die Herstellung von Siliconelastomeren mit guten mechanischen Eigenschaften (Reißfestigkeit, Dehnbarkeit, Weiterreißwiderstand etc.) ist nur möglich, wenn a) ausreichend lange Siliconpolymere (also mit ausreichend hohem Polymerisationsgrad bzw. Molekulargewicht) eingesetzt werden und b) zugleich aktiv verstärkende Füllstoffe (pyrogen erzeugte oder gefällte Kieselsäuren, Ruße etc.) in der Masse vorhanden sind. Beides führt unvermeidbar zu Siliconzusammensetzungen mit hoher Viskosität, die der sauberen Tropfenbildung beim Jetten entgegensteht. Unter dem Begriff "aktiv verstärkender Füllstoff" oder synonym "verstärkender Füllstoff" wird hier ein Füllstoff verstanden, der die mechanischen Eigenschaften der Elastomere, in denen er eingesetzt wird, verbessert. Im Gegensatz dazu wirken inaktive Füllstoffe als Streckmittel und verdünnen das Elastomer. Mit zunehmender Viskosität wird das rasche Abreißen des Materialfadens am Düsenausgang erschwert, d.h., der Haupttropfen bleibt verhältnismäßig lange Zeit über den Materialfaden mit der Düse verbunden, während sich der Druckkopf permanent weiterbewegt. Zum anderen ist für die rasche Ausbildung eines diskreten Tropfens beim Jetten eine möglichst hohe Oberflächenspannung des Materials notwendig. Die Oberflächenspannung verursacht stets eine Minimierung der Oberfläche eines Gebildes, d.h., sie strebt eine Kugelgestalt an, was z.B. die Satellitenbildung und ein Splashing verhindern kann. Die Oberflächenspannung von Siliconen zählt jedoch zu den niedrigsten im Polymerbereich (noch niedrigere Oberflächenspannungen weisen lediglich perfluorierte Kohlenwasserstoffe auf). Während wässrige Drucktinten eine hohe Oberflächenspannung von ca. 70 mN/m aufweisen, liegt diese bei Silicon-basierten Druckmaterialien lediglich bei ca. 20-25 mN/m. Eine weitere Schwierigkeit bei der Herstellung hochtransparenter Siliconformteile besteht darin, dass füllstoffhaltige Siliconzusammensetzungen im Allgemeinen transluzent sind, was deren Verwendung in optischen Anwendungen (z.B. Linsen) ausschließt. Diese Unzulänglichkeit Füllstoffverstärkter Siliconzusammensetzungen kann vermieden werden, indem man Siliconharze als Verstärkungsmittel einsetzt. Auf diese Weise ist die Herstellung hochtransparanter Siliconformteile mit ausreichender mechanischer Festigkeit möglich. Während jedoch füllstoffhaltige Siliconzusammensetzungen ein ausgeprägtes scherverdünnendes Verhalten zeigen, wodurch deren Jetting überhaupt erst möglich wird, weisen Siliconharz-verstärkte Siliconmassen nahezu kein scherverdünnendes Verhalten auf. Aufgrund dieser Schwierigkeiten galt die Herstellung hochtransparenter Siliconformteile im DOD-Jetting-Verfahren bislang als nicht durchführbar.

Aufgabe der vorliegenden Erfindung war daher die Bereitstellung von vernetzbaren Siliconzusammensetzungen, die den Anforderungen an Verarbeitungseigenschaften und -zeit für einen Einsatz in ballistischen generativen Verfahren (3D-Druck) genügen, und die Herstellung hochtransparenter Formkörper ermöglichen.

In umfangreichen Versuchen wurde überraschend festgestellt, dass die erfindungsgemäßen Siliconzusammensetzungen diese Aufgabe lösen, da sie besondere rheologische und Grenzflächeneigenschaften aufweisen und so eine Herstellung von hochtransparenten Formteilen mittels 3D-Druck im ballistischen DOD-Verfahren (Jetting) ermöglichen.

## Die erfindungsgemäße Siliconzusammensetzung

Die erfindungsgemäßen vernetzbaren Siliconzusammensetzungen für den 3D-Druck von Siliconformteilen im ballistischen generativen DOD-Verfahren enthalten:

(A) 5 bis 99 Gew.-% eines Organosiliconharzes, aufgebaut aus Einheiten der allgemeinen Formeln

$$R_3SiO_{1/2} \qquad (I),$$

$$R_2SiO_{2/2} \qquad (II),$$

$$RSiO_{3/2} \qquad (III)$$

und

$$SiO_{4/2} \qquad (IV),$$

wobei die Reste R gleich oder verschieden sein können und einen H-, HO- oder einen beliebigen ggf. substituierten 1-40 Kohlenstoffatome enthaltenden Rest bedeuten,

mit der Maßgabe, dass der Gehalt des Siliconharzes an Einheiten der Formel (III) und (IV) mindestens 5 Mol.-% beträgt,

(B) 0 bis 95 Gew.-% mindestens einer Organosiliciumverbindung mit durchschnittlich mindestens zwei aliphatisch ungesättigten Gruppen pro Molekül, mit der Maßgabe, dass ihr Gehalt an T- und Q-Einheiten kleiner 5 Mol.-% beträgt,

(C) 0 bis 50 Gew.-% mindestens einer Organosiliciumverbindung mit durchschnittlich mindestens zwei SiH-Gruppen pro Molekül, mit der Maßgabe, dass ihr Gehalt an T- und Q-Einheiten kleiner 5 Mol.-% beträgt,

oder anstelle von (B) und/oder (C) oder zusätzlich zu (B) und (C)

(D) 0 bis 95 Gew.-% mindestens einer Organosiliciumverbindung mit durchschnittlich mindestens zwei aliphatisch ungesättigten Gruppen und mindestens zwei SiH-Gruppen pro Molekül, mit der Maßgabe, dass ihr Gehalt an T- und Q-Einheiten kleiner 5 Mol.-% beträgt

wobei die Mengen der Bestandteile (B), (C) sowie (D) so gewählt werden, dass stets mindestens ein Bestandteil vorhanden ist, welcher durchschnittlich mindestens zwei aliphatisch ungesättigte Gruppen pro Molekül enthält, und zugleich mindestens ein Bestandteil vorhanden ist, welcher durchschnittlich mindestens zwei Si-gebundene Wasserstoffatome pro Molekül enthält,

(E) 0,1 bis 500 Gew.-ppm mindestens eines Hydrosilylierungskatalysators bezogen auf den Gehalt des Metalls zur gesamten Siliconzusammensetzung,

(F) 0,01 bis 5 Gew.-% eines rheologischen Agens, welches polare Gruppen enthält und ausgewählt wird aus (F1), (F2) und (F3) sowie deren Mischungen

(F1) Epoxygruppen-funktionellen Verbindungen,
(F2) (Poly)ethergruppen-funktionellen Verbindungen,
(F3) (Poly)estergruppen-funktionellen Verbindungen, wobei die Epoxy- und Ether- und Ester-Gruppen auch in einem einzigen Molekül vorhanden sein können,

(G) 0 bis 30 Gew.-% Hilfsstoffe die sich von (A) bis (F) unterscheiden,
dadurch gekennzeichnet, dass
die Relaxationszeit $\tau$ der Siliconzusammensetzung im folgenden Bereich liegt:

$$0,01 \text{ Sekunden} < \tau \leq 15 \text{ Sekunden,}$$

wobei sich $\tau$ aus Formel (V) ergibt:

$$\eta(t) = \eta_{max} + (\eta_0 - \eta_{max}) * EXP(-t/\tau), \qquad (V)$$

wobei

- $\eta(t)$ die Viskosität zum Zeitpunkt t ist,
- $\eta_{max}$ die nach Wegfall der Scherung innerhalb einer vorgegebenen Zeit erzielte maximale Viskosität bezeichnet,
- $\eta_0$ die unmittelbar nach starker Scherung (also zum Zeitpunkt t=0) gemessene Viskosität ist, und
- EXP die e-Funktion bedeutet,

und dadurch gekennzeichnet, dass
der den Grad des scherverdünnenden Verhaltens der Siliconzusammensetzung quantifizierende nominelle Fließindex n im folgenden Bereich liegt:

$$-1,00 < n < -0,10,$$

wobei sich n aus Formel (VI) ergibt:

$$\log \eta = \log K + n * \log v, \qquad (VI)$$

wobei

$\eta$ die Viskosität bei der Scherrate v,
K den nominellen Konsistenzindex,
v die Scherrate und
log den dekadischen Logarithmus darstellt,

und die Bestimmung der Relaxationszeit $\tau$ nach Formel (V), des nominellen Fließindex n sowie des nominellen Konsistenzindex K nach Formel (VI) gemäß der in der Beschreibung offenbarten Rheologischen Messmethode erfolgt.

Dem Fachmann sind die vier Struktureinheiten der Silicone seit langem bekannt. Die M-Einheit ist eine monofunktionelle Struktureinheit am Kettenende. Die D-Einheit ist eine difunktionelle, lineare Struktureinheit in Ketten. Die T-Einheit ist eine trifunktionelle Struktureinheit, die Verzweigungen in drei Raumrichtungen bildet. Die Q-Einheit ist eine tetrafunktionelle Struktureinheit, die Verzweigungen in vier Raumrichtungen bildet.

Die Relaxationszeit $\tau$ der erfindungsgemäßen Siliconzusammensetzung liegt bevorzugt im Bereich 0,1 Sekunden < $\tau$ ≤ 12 Sekunden und besonders bevorzugt im Bereich 1 Sekunden < $\tau$ ≤ 9 Sekunden.

Vorzugsweise liegt der nominelle Fließindex n im Bereich -0,90 < n < -0,30, und besonders bevorzugt im Bereich -0,80 < n < -0,40.

Der die Art und den Umfang des scherverdünnenden Verhaltens charakterisierende nominelle Fließindex n beschreibt für n < 0 scherverdünnendes, für n > 0 scherverdickendes (dilatantes) und für n = 0 newtonsches Fließverhalten.

**Bestandteil** (**A**) der erfindungsgemäßen Siliconzusammensetzungen ist ein (oder mehrere) Organosiliconharz(e), aufgebaut aus Einheiten der Formeln (I), (II), (III) und (IV),

$$R_3SiO_{1/2} \qquad (I),$$

$$R_2SiO_{2/2} \qquad (II),$$

$$RSiO_{3/2} \qquad (III)$$

und

$$SiO_{4/2} \qquad (IV),$$

wobei die Reste R gleich oder verschieden sein können und einen H-, HO- oder einen beliebigen ggf. substituierten 1-40 Kohlenstoffatome enthaltenden Rest bedeuten, mit der Maßgabe, dass der Gehalt des Siliconharzes (A) an Einheiten der Formel (III) und (IV) mindestens 5 Mol.-%, vorzugsweise mindestens 10 Mol.-%, insbesondere mindestens 30 Mol.-% und vorzugsweise höchstens 80 Mol.-%, insbesondere höchstens 70 Mol.-% beträgt.

Besonders bevorzugt sind Organosiliconharze (A) aus Einheiten der Formeln (I) und (IV), die dem Fachmann unter der Bezeichnung MQ-Harze bekannt sind.

Organosiliconharze (A) mit Si-gebundenen Wasserstoffatomen weisen einen H-Gehalt von maximal 1,2 Gew.-%, vorzugsweise maximal 0,6 Gew.-%, besonders bevorzugt maximal 0,3 Gew.-% auf. Der Gehalt der Organosiliconharze (A) an Si-gebundenen OH-Gruppen beträgt höchstens 7 Gew.-%, vorzugsweise höchstens 3 Gew.-%, insbesondere höchstens 0,5 Gew.-%. Die Verwendung OHarmer Organosiliconharze ist bevorzugt.

Das durchschnittliche zahlenmittlere Molekulargewicht der Organosiliconharze (A) beträgt vorzugsweise mindestens 200 g/mol, insbesondere mindestens 1.000 g/mol und vorzugsweise höchstens 100.000 g/mol, insbesondere höchstens 20.000 g/mol. Bei Rest R kann es sich um ein- oder mehrwertige Reste handeln, wobei die mehrwertigen Reste, wie bivalente, trivalente und tetravalente Reste, dann mehrere, wie etwa zwei, drei oder vier Siloxy-Einheiten der Formeln (I) bis (IV) miteinander verbinden.

Vorzugsweise sind die Reste R über ein Kohlenstoff- oder Sauerstoffatom am Silicium gebunden. Beispiele für SiCgebundene Reste R sind Alkylreste (z.B. Methyl-, Ethyl-, Octyl- und Octadecylrest), Cycloalkylreste (z.B. Cyclopentyl-, Cyclohexyl- und Methylcyclohexylrest), Arylreste (z.B. Phenyl- und Naphthylrest), Alkarylreste (z.B. Tolyl- und Xylylrest) und Aralkylreste (z.B. Benzyl- und beta-Phenylethylrest). Beispiele für substituierte Reste R sind 3,3,3-Trifluor-n-propyl-, p-Chlorphenyl-, Chlormethyl-, Glycidoxypropyl- und -(CH_2)_{n*}-(OCH_2CH_2)_{m*}-OCH_3., wobei n* und m* gleiche oder verschiedene ganze Zahlen zwischen 0 und 10 sind. Besonders bevorzugte Reste R sind der Methyl- und Phenylrest. Beispiele für SiO-gebundene Reste R sind Alkoxygruppen (z.B. Methoxy-, Ethoxy-, iso-Propoxy- und tert.-Butoxyreste) und der p-Nitrophenoxyrest.

Bei Rest R kann es sich um beliebige Alkenyl- und Alkinylgruppen mit 2 bis 16 C-Atomen handeln, wie Vinyl-, Allyl-, Methallyl-, 1-Propenyl-, 5-Hexenyl-, Ethinyl-, Butadienyl-, Hexadienyl, Undecenyl, Cyclopentenyl-, Cyclopentadienyl-, Norbornenyl- und Styrylrest, wobei Vinyl-, Allyl- und Hexenylreste besonders bevorzugt sind.

Bei Rest R kann es sich um substituierte aliphatisch ungesättigte Gruppen handeln, beispielsweise Allyloxypropyl-, Isopropenyloxy, 3-Acryloxypropyl-, 2-Acryloxyethoxy-, Acryloxymethyl-, Acryloxy-, Methacryloxy-, Methacryloxyethoxy- und Methacryloxypropylrest.

Das Organosiliconharz (A) kann zugleich Si-gebundene H-Atome und aliphatisch ungesättigte Gruppen enthalten und ist damit zur Vernetzungsreaktion in Gegenwart eines Hydrosilylierungskatalysators in der Lage, ohne das weitere Zusätze wie (B) und (C) oder (D)erforderlich sind. Gleiches gilt bei der Verwendung einer Mischung bestehend aus einem Si-gebundene H-Atome enthaltenden Organosiliconharzes (A) und einem aliphatisch ungesättigte Gruppen enthaltenden Organosiliconharz (A). Derartige Siliconharzzusammensetzungen eignen sich insbesondere zur Herstellung sehr harter, hochtransparenter Formteile.

Falls die Formteile das Eigenschaftsprofil eines Siliconelastomers aufweisen sollen, empfiehlt sich die zusätzliche Verwendung der Bestandteile (B) und (C). In diesem Fall fungiert das Organosiliconharz (A) als Verstärkungsmittel, um eine ausreichende mechanische Festigkeit der vernetzten Siliconzusammensetzung zu erzielen, ohne die bei Verwendung aktiv verstärkender Füllstoffe in Erscheinung tretende hohe Viskosität und Trübung in Kauf nehmen zu müssen. Unter mechanischer Festigkeit wird hierbei die Gesamtheit der für vernetzte Silicone typischen Eigenschaften verstanden, insbesondere Härte, Reißdehnung, Reißfestigkeit und Weiterreißwiderstand.

Der Gehalt der erfindungsgemäßen Siliconzusammensetzung an Bestandteil (A) beträgt zwischen 5 und 99 Gew.-%,

vorzugsweise zwischen 10 und 60 Gew.-%, besonders bevorzugt zwischen 20 und 50 Gew.-%.

**Bestandteil (B)** der erfindungsgemäßen Siliconzusammensetzung ist eine mindestens zwei aliphatische Kohlenstoff-Kohlenstoff-Mehrfachbindungen aufweisende Organosiliciumverbindung, deren gesamter Gehalt an T- und Q-Einheiten kleiner 5 Mol.-%, vorzugsweise kleiner 1 Mol.-%, besonders bevorzugt kleiner 0,5 Mol.-% ist. (B) ist aus Einheiten der Formel (VII) aufgebaut:

$$R^1_a R^2_b SiO_{(4-a-b)/2} \qquad (VII),$$

wobei

$R^1$ gleich oder verschieden sein kann und einen von aliphatischen Kohlenstoff-Kohlenstoff-Mehrfachbindungen freien, ggf. halogensubstituierten, gegebenenfalls O-, N-, S- oder P-Atome enthaltenden $C_1$-$C_{20}$-Rest oder OH-Rest bedeutet,
$R^2$ gleich oder verschieden sein kann und einen einwertigen, gegebenenfalls substituierten organischen Rest mit aliphatischer Kohlenstoff-Kohlenstoff-Mehrfachbindung bedeutet, a 0, 1, 2 oder 3 ist und
b 0, 1 oder 2 ist

mit der Maßgabe, dass a + b < 4 ist, mindestens 2 Reste $R^1$ pro Molekül vorliegen und der gesamte Gehalt an T- und Q-Einheiten also Einheiten der Formel (VII) für die a=0 und b=0, a=1 und b=0, a=0 und b=1 gilt, kleiner 5 Mol.-%, vorzugsweise kleiner 1 Mol.-%, besonders bevorzugt kleiner 0,5 Mol.-% beträgt. Vorzugsweise sind die Reste $R^1$ über ein Kohlenstoff- oder Sauerstoffatom am Silicium gebunden. Beispiele für SiCgebundene Reste $R^1$ sind Alkylreste (z.B. Methyl-, Ethyl-, Octyl- und Octadecylrest), Cycloalkylreste (z.B. Cyclopentyl-, Cyclohexyl- und Methylcyclohexylrest), Arylreste (z.B. Phenyl- und Naphthylrest), Alkarylreste (z.B. Tolyl- und Xylylrest) und Aralkylreste (z.B. Benzyl- und beta-Phenylethylrest). Beispiele für substituierte Reste $R^1$ sind 3,3,3-Trifluor-n-propyl-, p-Chlorphenyl-, Chlormethyl-, Glycidoxypropyl- und $-(CH_2)_{n^{**}}-(OCH_2CH_2)_{m^{**}}-OCH_3$, wobei $n^{**}$ und $m^{**}$ gleiche oder verschiedene ganze Zahlen zwischen 0 und 10 sind. Beispiele für SiO-gebundene Reste $R^1$ sind Alkoxygruppen (z.B. Methoxy-, Ethoxy-, iso-Propoxy- und tert.-Butoxyreste) und der p-Nitrophenoxyrest. Besonders bevorzugte Reste $R^1$ sind der Methyl- und Phenylrest.

Bei Rest $R^2$ kann es sich um beliebige, einer Anlagerungsreaktion (Hydrosilylierung) mit einer SiHfunktionellen Verbindung zugängliche Gruppen handeln. Bevorzugt handelt es sich bei Rest $R^2$ um Alkenyl- und Alkinylgruppen mit 2 bis 16 C-Atomen, wie Vinyl-, Allyl-, Methallyl-, 1-Propenyl-, 5-Hexenyl-, Ethinyl-, Butadienyl-, Hexadienyl, Undecenyl, Cyclopentenyl-, Cyclopentadienyl-, Norbornenyl- und Styrylrest, wobei Vinyl-, Allyl- und Hexenylreste besonders bevorzugt sind. Bei Rest $R^2$ kann es sich auch um substituierte ungesättigte Reste handeln, beispielsweise Allyloxypropyl-, Isopropenyloxy, 3-Acryloxypropyl-, 2-Acryloxyethoxy-, Acryloxymethyl-, Acryloxy-, Methacryloxy-, Methacryloxyethoxy- und Methacryloxypropylrest.

Bei den Resten $R^1$ und $R^2$ kann es sich um ein- oder mehrwertige Reste handeln, wobei die mehrwertigen Reste, wie bivalente, trivalente und tetravalente Reste, dann mehrere, wie etwa zwei, drei oder vier Siloxy-Einheiten der Formel (VII) miteinander verbinden.

Bevorzugt als Bestandteil (B) ist die Verwendung vinylfunktioneller, linearer oder cyclischer Polyorganosiloxane mit einer Viskosität von 10 bis 500.000 mPa.s, besonders bevorzugt zwischen 100 und 50.000 mPa.s (bei 25°C und 0,8 $sec^{-1}$). Besonders bevorzugt sind vinylfunktionelle, im Wesentlichen lineare Polydiorganosiloxane. Bestandteil (B) kann eine Mischung unterschiedlicher siliciumorganischer Verbindungen der oben beschriebenen Art sein.

Der Gehalt der erfindungsgemäßen Siliconzusammensetzung an Bestandteil (B) beträgt 0 bis 95 Gew.-%, bevorzugt 30 bis 80 Gew.-%, besonders bevorzugt 30 bis 60 Gew.-%.

**Bestandteil (C)** ist eine beliebige SiH-funktionelle siliciumorganische Verbindung mit durchschnittlich mindestens zwei SiH-Gruppen pro Molekül, die frei von aliphatisch ungesättigten Gruppen ist. Ihr gesamter Gehalt an T- und Q-Einheiten ist kleiner 5 Mol.-%, vorzugsweise kleiner 1 Mol.-%, besonders bevorzugt kleiner 0,5 Mol.-%. Bestandteil (C) fungiert als Vernetzer der Siliconzusammensetzung. Bestandteil (C) kann auch eine Mischung verschiedener SiH-funktioneller siliciumorganischer Verbindungen sein. Vorzugsweise stellt Bestandteil (C) lineare oder cyclische Polyorganosiloxane mit Si-gebundenen Wasserstoffatomen dar, welche aus Einheiten der Formel (VIII)

$$R^1_c H_d SiO_{(4-c-d)/2} \qquad (VIII)$$

zusammengesetzt sind, wobei

$R^1$ gleich oder verschieden sein kann und die oben gegebene Bedeutung hat,
c 1, 2 oder 3 ist und
d 0, 1 oder 2 ist,

mit der Maßgabe, dass die Summe von (c+d) kleiner oder gleich 3 ist, durchschnittlich mindestens zwei Si-gebundene Wasserstoffatome je Molekül vorhanden sind und der gesamte Gehalt an T- und Q-Einheiten also Einheiten der Formel (VIII) für die c=0 und d=0, c=1 und d=0, c=0 und d=1 gilt, kleiner 5 Mol.-%, vorzugsweise kleiner 1 Mol.-%, besonders bevorzugt kleiner 0,5 Mol.-% beträgt.

Vorzugsweise enthält Bestandteil (C) Si-gebundenen Wasserstoff im Bereich von 0,04 bis 1,7 Gew.-% bezogen auf das Gesamtgewicht des Organopolysiloxans (C). Das zahlenmittlere Molekulargewicht des Bestandteils (C) kann in weiten Grenzen variieren, etwa zwischen $10^2$ und $10^6$ g/mol. So kann es sich bei dem Bestandteil (C) beispielsweise um ein relativ niedrigmolekulares SiH-funktionelles Oligosiloxan, wie Tetramethyldisiloxan, handeln, jedoch auch um ein über kettenständige und/oder endständige SiH-Gruppen verfügendes hochpolymeres Polydimethylsiloxan. Bevorzugt ist die Verwendung niedermolekularer SiH-funktioneller Verbindungen, wie Tetramethylcyclotetrasiloxan, SiH-haltiger Siloxane, wie Poly(hydrogenmethyl)siloxan und Poly(dimethyl-hydrogenmethyl)siloxan mit einer Viskosität von 10 bis 1.000 mPa.s (bei 25°C und 0,8 sec$^{-1}$). Bevorzugt sind Bestandteile (C), welche mit dem Bestandteilen (A) und (B) verträglich (homogen mischbar oder zumindest emulgierbar) sind. Je nach Art der Bestandteile (A) und (B) kann es daher erforderlich sein, Bestandteil (C) geeignet zu substituieren, z.B. indem ein Teil der Methylgruppen durch 3,3,3-Trifluorpropyl- oder Phenylgruppen ersetzt wird.

Bestandteil (C) kann einzeln oder als Mischung aus mindestens zwei verschiedenen (C) eingesetzt werden und ist vorzugsweise in einer solchen Menge in der erfindungsgemäßen Siliconzusammensetzung enthalten, dass das Molverhältnis von SiH-Gruppen zu aliphatisch ungesättigten Gruppen bei 0,1 bis 20, bevorzugt zwischen 0,5 und 5, besonders bevorzugt zwischen 1 und 2 liegt. Der Gehalt der erfindungsgemäßen Siliconzusammensetzung an Bestandteil (C) beträgt 0 bis 50 Gew.-%, bevorzugt 0,5-30 Gew.-%, besonders bevorzugt 2-15 Gew.-%.

**Bestandteil (D)** kann anstelle von (B) und/oder (C) oder zusätzlich zu (B) und (C) eingesetzt werden. In den erfindungsgemäßen additionsvernetzbaren Zusammensetzungen sind also folgende Kombinationen möglich: (B)+(C) oder (B)+(D) oder (C)+(D) oder (B)+(C)+(D) oder (D) alleine. (D) ist eine Organosiliciumverbindung mit mindestens zwei aliphatisch ungesättigten Gruppen und mindestens zwei SiH-Gruppen pro Molekül und kann somit mit sich selbst vernetzen, mit der Maßgabe, dass der Gehalt an T- und Q-Einheiten kleiner 5 Mol.-%, vorzugsweise kleiner 1 Mol.-%, besonders bevorzugt kleiner 0,5 Mol.-% beträgt. Verbindungen (D) sind dem Fachmann aus dem Stand der Technik allgemein bekannt. Falls Verbindungen (D) eingesetzt werden, handelt es sich vorzugsweise um solche aus Einheiten der allgemeinen Formeln

$$R^1_k SiO_{(4-k)/2} \text{ (IX)}, \quad R^1_m R^2 SiO_{(3-m)/2} \text{ (X) und } R^1_o HSiO_{(3-o)/2} \quad \text{(XI)},$$

wobei

$R^1$ und $R^2$ die oben genannte Bedeutung haben und
k 0, 1, 2 oder 3,
m 0, 1 oder 2,
o 0, 1 oder 2,
bedeuten,
mit der Maßgabe, dass durchschnittlich mindestens 2 Reste $R^1$ und durchschnittlich mindestens 2 Si-gebundene Wasserstoffatome vorliegen, und der gesamte Gehalt an T- und Q-Einheiten, also Einheiten der Formel (IX), (X) und (XI) für die k=0, k=1, m=0, o=0 gilt, kleiner 5 Mol.-%, vorzugsweise kleiner 1 Mol.-%, besonders bevorzugt kleiner 0,5 Mol.-% beträgt,

verwendet.
Die Verbindungen (D) sind vorzugsweise linear oder cyclisch. Es kann eine einzelne Verbindung (D) oder eine Mischung aus mindestens zwei Verbindungen (D) eingesetzt werden.
Der Gehalt der erfindungsgemäßen Siliconzusammensetzung an Bestandteil (D) beträgt 0 - 95 Gew.-%.
**Bestandteil (E)** dient als Katalysator für die Additionsreaktion (Hydrosilylierung) zwischen den aliphatisch ungesättigten Gruppen der Bestandteile (A), (B) und (D) (sofern vorhanden) und den siliciumgebundenen Wasserstoffatomen der Bestandteile (A), (C) bzw. (D) (sofern vorhanden). Prinzipiell können alle üblicherweise in additionsvernetzenden Siliconzusammensetzungen eingesetzten Hydrosilylierungskatalysatoren verwendet werden. Als die Anlagerung von Si-gebundenem Wasserstoff an aliphatische Mehrfachbindung fördernde Katalysatoren (E) sind beispielsweise Platin, Rhodium, Ruthenium, Palladium, Osmium oder Iridium, eine metallorganische Verbindung oder eine Kombination davon. Beispiele für solche Katalysatoren (E) sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z. B. $PtCl_4$, $H_2PtCl_6 \cdot 6H_2O$, $Na_2PtCl_4 \cdot 4H_2O$, Platinacetylacetonat und Komplexe der besagten Verbindungen, die in einer Matrix oder einer kernschalenartigen Struktur eingekapselt sind. Platin-Olefin-Komplexe, Platin-Phosphit-Komplexe Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6 \cdot 6H_2O$ und Cyclohexanon, Platin-Vinyl-Siloxankomplexe, wie Platin-1,3-Divinyl-1,1,3,3-tetra-methyl-disiloxankomplexe mit oder ohne Gehalt an nachweisbarem anorganisch gebundenem Halogen, Bis-(gamma-picolin)-platindichlorid,

Trimethylendipyridinplatindichlorid, Dicyclopentadienplatindichlorid, Dimethylsulfoxydethylenplatin(II)-di-chlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin oder Ammonium-Platinkomplexe, Trimethyl-cyclopentadienyl-platin(IV), Trimethyl[(3-trimethoxysilyl)propyl-cyclopentadienyl]-platin(IV).

Die aufgeführten Hydrosilylierungskatalysatoren ermöglichen in der Regel selbst bei Raumtemperatur eine rasche Vernetzung der Siliconzusammensetzung. Da die Hydrosilylierungsreaktion sofort nach Vermischen aller Bestandteile einsetzt, werden additionsvernetzende Massen meist in Form von mindestens zwei Komponenten formuliert, wobei eine Komponente A den Platinkatalysator (E) und eine andere Komponente B die über Si-gebundene Wasserstoffatome verfügenden Bestandteile wie Vernetzer (C) (ggf. (A) oder (D)) enthält. Durch Verwendung spezieller Hydrosilylierungskatalysatoren ist es jedoch auch möglich, einkomponentige Siliconzusammensetzungen zu formulieren. Um auch nach Vermischen der beiden Komponenten eine ausreichende Verarbeitungszeit zur Verfügung zu haben, werden meist Inhibitoren zugesetzt, welche das Einsetzen der Vernetzungsreaktion hinauszögern. Durch Zufuhr von Wärme kann dann eine rasche Vernetzung herbeigeführt werden. Für die Verwendung additionsvernetzender Massen im 3D-Druck-Verfahren sind jedoch solche Hydrosilylierungskatalysatoren bevorzugt, welche thermisch schlecht, jedoch durch energiereiche Strahlung (UV, UV-VIS) sehr leicht aktiviert werden können, d.h., die deponierte Siliconzusammensetzung wird nicht thermisch, sondern vorzugsweise durch UV- oder UV-VIS-Strahlung initiiert vernetzt. Dies erfolgt beispielsweise entweder über einen aktivierbaren Hydrosilylierungskatalysator (E) oder über einen deaktivierbaren zusätzlich enthaltenen Inhibitor (G). Gegenüber einer thermischen Vernetzung hat die UV-oder UV-VIS-induzierte Vernetzung zahlreiche Vorteile. Zum einen können Intensität, Einwirkungszeit und Einwirkungsort der UV-Strahlung genau bemessen werden, während das Aufheizen der tropfenweise abgeschiedenen Siliconzusammensetzung (wie auch deren anschließendes Abkühlen) durch die relativ geringe thermische Leitfähigkeit stets verzögert erfolgt. Aufgrund des intrinsisch sehr hohen thermischen Ausdehnungskoeffizienten der Silicone führen die bei der thermischen Vernetzung zwangsläufig vorhandenen Temperaturgradienten zu mechanischen Spannungen, welche die Maßhaltigkeit des gebildeten Formteils negativ beeinflussen, was im Extremfall zu inakzeptablen Formverzerrungen führen kann. Ein weiterer Vorteil der UV/VISinduzierten Additionsvernetzung zeigt sich bei der Herstellung von Mehrkomponentenformteilen, wie beispielsweise Hart-Weichverbunden, die neben dem Siliconelastomer einen Thermoplasten enthalten, dessen thermisch bedingter Verzug vermieden wird.

UV/VIS-induzierte additionsvernetzende Siliconzusammensetzungen sind den Fachmann bekannt und werden beispielsweise in DE 10 2008 000 156 A1, DE 10 2008 043 316 A1, DE 10 2009 002 231 A1, DE 10 2009 027 486 A1, DE 10 2010 043 149 A1 und WO 2009/027133 A2 beschrieben. Die Vernetzung kommt durch UV/VIS-induzierte Aktivierung eines lichtempfindlichen Hydrosilylierungskatalysators (E) zustande, wobei Komplexe des Platins bevorzugt sind. In der Fachliteratur werden zahlreiche durch Licht aktivierbare Platinkatalysatoren beschrieben, die unter Lichtausschluss weitgehend inaktiv sind und durch Bestrahlung mit Licht mit einer Wellenlänge von 250-500 nm in bei Raumtemperatur aktive Platinkatalysatoren überführt werden können. Dem Fachmann seit langem bekannte Beispiele hierfür sind ($\eta$-Diolefin)($\sigma$-aryl)-Platinkomplexe (EP 0 122 008 A1; EP 0 561 919 B1), Pt(II)-$\beta$-diketonatkomplexe (EP 0 398 701 B1) und ($\eta^5$-Cyclopentadienyl)tri($\sigma$-alkyl)Platin(IV)-Komplexe (EP 0 146 307 B1, EP 0 358 452 B1, EP 0 561 893 B1). Besonders bevorzugt sind $MeCpPtMe_3$ sowie die sich davon durch Substitution der am Platin befindlichen Gruppen ableitenden Komplexe wie beispielsweise beschrieben in EP 1 050 538 B1 und EP 1 803 728 B1. Die UV- oder UV-VIS-induziert vernetzenden Massen können ein- oder mehrkomponentig formuliert werden. Die Geschwindigkeit der UV/VIS-induzierten Additionsvernetzung hängt von zahlreichen Faktoren ab, insbesondere von der Art und Konzentration des Platin-Katalysators, von der Intensität, Wellenlänge und Einwirkungszeit der UV/VIS-Strahlung, der Transparenz, Reflektivität, Schichtdicke und Zusammensetzung der Siliconzusammensetzung und der Temperatur. Für die Aktivierung der UV/VIS-induzierten additionsvernetzenden Siliconzusammensetzung wird Licht der Wellenlänge 240-500 nm, bevorzugt 300-450 nm, besonders bevorzugt 350-400 nm eingesetzt. Um eine rasche Vernetzung zu erzielen, worunter eine Vernetzungszeit bei Raumtemperatur von weniger als 20 min, vorzugsweise weniger als 10 min, besonders bevorzugt weniger als 1 min. verstanden werden soll, empfiehlt sich die Verwendung einer UV/VIS-Strahlungsquelle mit einer Leistung zwischen 10 mW/cm$^2$ und 15.000 mW/cm$^2$, sowie eine Strahlungsdosis zwischen 150 mJ/cm$^2$ und 20.000 mJ/cm$^2$, bevorzugt zwischen 500 mJ/cm$^2$ und 10.000 mJ/cm$^2$. Im Rahmen dieser Leistungs- und Dosis-Werte lassen sich flächenspezifische Bestrahlungszeiten zwischen maximal 2.000 s/cm$^2$ und minimal 8 ms/cm$^2$ realisieren. Es können mehrere, auch unterschiedliche Strahlungsquellen verwendet werden.

Der Hydrosilylierungskatalysator (E) sollte vorzugsweise in einer katalytisch ausreichenden Menge eingesetzt werden, so dass eine hinreichend schnelle Vernetzung bei Raumtemperatur ermöglicht wird. Typischerweise werden 0,1 bis 500 Gew.-ppm des Katalysators bezogen auf den Gehalt des Metalls zur gesamten Siliconzusammensetzung verwendet, vorzugsweise 0,5-200 Gew.-ppm, besonders bevorzugt 1-50 Gew.-ppm. Es können auch Mischungen unterschiedlicher Hydrosilylierungskatalysatoren (E) verwendet werden.

**Bestandteil (F)** der erfindungsgemäßen Siliconzusammensetzung ist ein rheologisches Agens, welches der Einstellung des scherverdünnenden und thixotropen Verhaltens dient. Unter scherverdünnendem Verhalten wird hier die Abnahme der Viskosität mit zunehmender Scherrate verstanden. Thixotropes Verhalten ist der Grad und die Schnelligkeit der Viskositätserholung, mit welcher das Material versucht, nach Wegfall der Scherung in den Viskositätsausgangszustand zurückzukehren. Scherverdünnendes, strukturviskoses Verhalten wird vor allem durch zumindest teilweise reversible Strukturveränderungen im Material infolge der Scherkräfte verursacht. Beispielsweise können physikalische Partikel-Partikel-Netzwerke durch Scherkräfte aufgebrochen werden, wodurch das zuvor in diesem Netzwerk immobilisierte Polymer fließfähig wird und die Viskosität des Materials sinkt. Im Ruhezustand kann dieses Netzwerk oftmals wieder zurückgebildet werden (thixotropes Verhalten).

Dem Bestandteil (F) kommt für ein qualitativ hochwertiges Druckbild bei der ballistischen Deponierung von Siliconzusammensetzungen entscheidende Bedeutung zu.

Bestandteil (F) bewirkt einen hinreichend schnellen Viskositätsaufbau des deponierten Tröpfchens und verhindert dadurch ein übermäßiges Auseinanderfließen (Spreiten) sowie ein Verspritzen (Splashing). Zudem erzeugt Bestandteil (F) eine Fließgrenze, wodurch die deponierte Siliconzusammensetzung eine ausreichende Grünfestigkeit erlangt, die den Druck feiner struktureller Details ermöglicht und es bis zu einem gewissen Grad erlaubt, auf das zusätzliche Deponieren von Stützstrukturen zu verzichten. Trotz des durch den Bestandteil (F) bewirkten Viskositätsanstiegs können die den Bestandteil (F) enthaltenden erfindungsgemäßen Massen problemlos gejettet werden und führen zu einem sauberen Druckbild. Ersteres infolge der scherverdünnenden Wirkung von (F), Letzteres infolge der durch (F) verkürzten Relaxationszeit des gejetteten Tröpfchens. Die Wirksamkeit des rheologischen Agens (F) ist dabei an das Vorhandensein des Siliconharzes (A) in der Siliconzusammensetzung gebunden, da erst durch ihre Kombination die erfindungsgemäßen Zusammensetzung Eigenschaften erhält, die einen Einsatz für den 3D-Druck von Siliconformteilen im ballistischen generativen DOD-Verfahren ermöglichen.

Der Effekt des Bestandteils (F) in der erfindungsgemäßen Siliconzusammensetzung lässt sich mittels zweier rheologischer Kenngrößen charakterisieren und quantifizieren, der sogenannten Relaxationszeit $\tau$ (SI-Einheit: s) und dem nominellen Fließindex n (dimensionslos). Die Relaxationszeit $\tau$ ergibt sich aus Formel (V) :

$$\eta(t) = \eta_{max} + (\eta_0 - \eta_{max}) * EXP(-t/\tau), \qquad (V)$$

wobei $\eta(t)$ die Viskosität (SI-Einheit: Pa·s) zum Zeitpunkt t (SI-Einheit: s) ist,

$\eta_{max}$ (SI-Einheit: Pa·s) die nach Wegfall der Scherung innerhalb einer vorgegebenen Zeit erzielte maximale Viskosität bezeichnet,

$\eta_0$ (SI-Einheit: Pa·s) die unmittelbar nach starker Scherung (also zum Zeitpunkt t=0) gemessene Viskosität ist und EXP die e-Funktion bedeutet,

wobei die Bestimmung der Relaxationszeit $\tau$ gemäß der in der Beschreibung offenbarten Rheologischen Messmethode erfolgt.

Die so definierte Relaxationszeit $\tau$ beschreibt, wie schnell sich die Viskosität einer stark gescherten Masse erholt, wenn die Scherung abgestellt wird. Große Werte $\tau$ bedeuten eine langsame Viskositätserholung, kleine Werte ein schnelles Relaxieren. In umfangreichen Versuchen anhand unterschiedlicher Siliconzusammensetzungen wurde gefunden, dass nur jene siliconharzverstärkten Zusammensetzungen zu einem sauberen und damit erfindungsgemäßen Druckbild führen, deren Relaxationszeit $\tau$ höchstens 15 Sekunden beträgt, bevorzugt maximal 12, besonders bevorzugt maximal 9 Sekunden. Es zeigt sich, dass nicht erfindungsgemäße Siliconzusammensetzungen mit Relaxationszeiten $\tau > 15$ Sekunden stets zu einem unsauberen Druckbild führen (z.B. unzureichende Kantenschärfe, verwischte Strukturdetails etc.). Im Fall siliconharzverstärkter (füllstofffreier) Siliconzusammensetzungen stellt jedoch die Relaxationszeit allein kein hinreichendes Kriterium für die Verarbeitbarkeit im DOD-Verfahren dar. Und zwar deshalb nicht, weil der nach dem Jetting beobachtete Wiederaufbau der Viskosität überhaupt nur stattfinden kann, wenn zuvor (unter Scherung) eine ausreichende Viskositätsabnahme erfolgte, d.h., ein ausreichendes scherverdünnendes Verhalten vorlag. Letzteres wird durch den nominellen Fließindex n beschrieben. Ist dieser betragsmäßig zu klein, erfolgt unter Scherung keine ausreichende Viskositätsabnahme, folglich bei Wegfall der Scherung auch kein signifikanter Strukturaufbau, was dazu führt, dass für derartige Massen eine Angabe der Relaxationszeit ihren Sinn verliert. Die im Fall (F)-freier Siliconzusammensetzungen beobachtete Viskositätszunahme nach Scherung erfolgt nahezu immediat und hat ihre Ursache in einer Relaxation der bei der Scherung gestreckten Polymerketten in deren Gleichgewichtskonfiguration. Hingegen zeigen die erfindungsgemäßen (F)-haltigen Siliconzusammensetzungen eine Viskositätszunahme durch Strukturaufbau infolge der durch (F) vermittelten stärkeren intermolekularen Wechselwirkungen, d.h. ein ausreichendes scherverdünnendes Verhalten, was sich in Relaxationszeiten $\tau$ von mindestens 0,01 Sekunden, bevorzugt mindestens 0,1 Sekunden und besonders bevorzugt mindestens 1 Sekunde äußert.

Der den Grad des scherverdünnenden Verhaltens charakterisierende nominelle Fließindex n ergibt sich aus Formel (VI)

$$\log \eta = \log K + n * \log v, \qquad (VI)$$

wobei

$\eta$ die Viskosität (SI-Einheit: Pa·s) bei der Scherrate v (SI-Einheit: $s^{-1}$),

K den nominellen Konsistenzindex (SI-Einheit: Pa·$s^{n+1}$),

v die Scherrate (SI-Einheit: $s^{-1}$) und

log den dekadischen Logarithmus darstellt,

und die Bestimmung von n und K gemäß der in der Beschreibung offenbarten Rheologischen Messmethode erfolgt.

In umfangreichen Versuchen anhand unterschiedlicher siliconharzverstärkter Siliconzusammensetzungen wurde gefunden, dass nur jene Massen zu einem sauberen Druckbild führen, deren nomineller Fließindex n die Relation -1,00 < n < -0,10, vorzugsweise -0,90 < n < -0,30, besonders bevorzugt -0,80 < n < -0,40 erfüllt. Nicht erfindungsgemäße Siliconzusammensetzungen, deren nomineller Fließindex kleiner als -1,00 oder größer als - 0,10 ist führen zu einem unsauberen Druckbild (z.B. unzureichende Kantenschärfe, verwischte Strukturdetails etc.). Nur wenn sowohl der nominelle Fließindex n als auch die Relaxationszeit $\tau$ der siliconharzverstärkten Siliconzusammensetzung im erfindungsgemäßen Bereich liegen, ist die Herstellung qualitativ hochwertiger Formteile mittels ballistischer DOD-Verfahren möglich.

Erfindungsgemäße rheologische Additive (F) werden vorzugsweise aus folgender Gruppe ausgewählt

(F1) Epoxygruppen-funktionellen Verbindungen,

(F2) (Poly)ethergruppen-funktionellen Verbindungen und

(F3) (Poly)estergruppen-funktionellen Verbindungen

wobei die Epoxy- und Ether- und Ester-Gruppen auch in einem einzigen Molekül vorhanden sein können. Der Terminus "funktionell" bezieht sich auf eine stärkere Wechselwirkung zwischen der betreffenden Gruppe aus (F) und vor allem dem Bestandteil (A) im Vergleich zur Wechselwirkung zwischen (F) und den Siliconbestandteilen (B), (C) und (D). Diese stärkere Wechselwirkung umfasst vor allem Wasserstoffbrücken-Wechselwirkungen, Dispersionswechselwirkungen und polare Wechselwirkungen vom Debye- und Keesom-Typ. Die verstärkte Wechselwirkung von (F) mit (A) bewirkt die Ausbildung physikalischer (A)-(F)-(A)-Brücken, was zu einer netzwerkartigen Strukturierung der Siliconzusammensetzung führt, welche die Fließfähigkeit der übrigen Siliconbestandteile (B), (C) und (D) vermindert (Fließgrenze, hohe Ruheviskosität). Unter Schereinwirkung erfolgt Destrukturierung dieses Netzwerkes, erkennbar an einer starken Scherverdünnung. Nach Wegfall der Scherung verursacht die stärkere Wechselwirkung des rheologischen Agens (F) mit (A) den raschen (jedoch nicht immediaten) Wiederaufbau der Netzwerkstruktur verbunden mit einer Viskositätszunahme und Ausbildung einer Fließgrenze.

Bestandteil (F1) kann eine beliebige organische oder siliciumorganische Verbindung mit mindestens einer Epoxy-Gruppe sein und wird bevorzugt eingesetzt. Insbesondere bevorzugt sind epoxyfunktionelle organische Verbindungen (F1). Beispiele für organische epoxy-funktionelle Verbindungen (F1) sind 1,2-Epoxypropanol, Vinylcyclohexenmonoxid, Dodecanolglycidylether, Butylglycidylether, p-tert.-Butylphenylglycidylether, 2-Ethylhexylglycidylether, Glycidylmethacrylat, Dicyclopentadiendioxid, Vinylcyclohexendioxid, Butandioldiglycidylether, Neopentylglykoldiglycidylether, 1,6-Hexandioldiglycidylether, Polypropylenglykoldiglycidylether, Trimethylolpropantriglycidylether), 3,4-Epoxycyclohexylmethyl-3',4'-epoxycyclohexancarboxylat. Bestandteil (F1) kann ein epoxidiertes oder Epoxy-Gruppen enthaltendes Pflanzenöl sein, wie epoxidiertes Raps-, Sonnenblumen-, Lein-, Sojabohnen-, Palm-, Krambe-, Rizinus- und Vernoniaöl, oder eine epoxidierte Fettsäure, wie epoxidierte Öl-, Petroselin-, Eruca-, Linol-, Linolen-, Ricinol-, Calendula-, Vernol- und Santalbinsäure.

Bevorzugte Bestandteile (F1) sind siliciumorganische epoxy-funktionelle Verbindungen, die aus Einheiten der Formel (XII)

$$R_e R^3_f SiO_{(4-e-f)/2}, \qquad (XII)$$

zusammengesetzt sind,

wobei R gleich oder verschieden sein kann und die weiter oben für die Formeln (I) bis (IV) angegebene Bedeutung hat, $R^3$ ein mindestens eine Epoxy-Gruppe $CH_2(-O-)CH-$ oder $-CH(-O-)CH-$ enthaltender, gegebenenfalls halogensubstituierter, gegebenenfalls O-, N-, S- oder P-Atome enthaltender monovalenter Kohlenwasserstoffrest mit 2 bis 20

12

C-Atomen ist, mit der Maßgabe, dass
e 0, 1, 2 oder 3,
f 0, 1, 2, 3 oder 4,
und (e+f)<5 ist.

Beispiele hierfür sind epoxyfunktionelle Silane wie 2-(3,4-Epoxycyclohexyl)ethyltriethoxysilan, 2-(3,4-Epoxycyclohexyl)ethyltrimethoxysilan, (3-Glycidoxypropyl)trimethoxysilan, (3-Glycidoxypropyl)triethoxysilan, 5,6-Epoxyhexyltriethoxysilan, (3-Glycidoxypropyl)methyldimethoxysilan, (3-Glycidoxypropyl)methyldiethoxysilan, (3-Glycidoxypropyl)dimethylethoxysilan und Tris(glycidoxypropyldimethylsiloxy)phenylsilan. Weitere Beispiele für siliciumorganische Verbindungen (F1) sind epoxyfunktionelle Siloxane wie Bis(2-(3,4-Epoxycyclohexyl)ethyl)tetramethyldisiloxan, 1,5-Bis(glycidoxypropyl)-3-phenyl-1,1,3,5,5-pentamethyltrisiloxan, (3-Glycidoxypropyl)bis(trimethylsiloxy)silan, (3-Glycidoxypropyl)pentamethyldisiloxan, 1,3-Bis(glycidoxypropyl)tetramethyldisiloxan, Glycidoxypropyltetramethylcyclotetrasiloxan, Glycidoxypropyltrimethoxysilylethyl-pentamethylcyclopentasiloxan, Glycidoxypropyl-terminierte Polydimethylsiloxane, Epoxycyclohexylethyl-terminierte Polydimethylsiloxane, copolymere Poly(epoxycylohexylethylmethyl-dimethyl)siloxane und copolymere Poly(epoxycyclohexylethylmethyl-dimethyl-polyalkylenoxypropylmethyl)siloxane.

Bestandteil (F2) ist eine (oder ein Gemisch mehrerer) Polyether-funktionelle organische oder siliciumorganische Verbindung. Bevorzugt sind Polyalkylenglycole der allgemeinen Formel (XIII)

$$R^4\text{-(O-CH}_2\text{-CHR}^5)_p\text{-OR}^4, \qquad \text{(XIII)}$$

wobei die Reste

$R^4$ gleich oder verschieden sein können und einen gegebenenfalls halogensubstituierten, gegebenenfalls O-, S-, N- oder P-Atome enthaltenden monovalenten, gesättigten oder ungesättigten $C_1$-$C_{20}$-Kohlenwassertsoffrest, ein Wasserstoffatom oder einen monovalenten siliciumorganischen Rest, bestehend aus Einheiten der Formeln (I) bis (IV), darstellen,
die Reste $R^5$ gleich oder verschieden sein können und ein Wasserstoffatom oder ein $C_1$-$C_4$-Kohlenwasserstoffrest sind, bevorzugt ein Wasserstoffatom oder ein Methylrest,
p eine ganze Zahl von 1 bis 1000, bevorzugt 1 bis 500 und besonders bevorzugt 5-100 ist.
Bevorzugt sind Polyalkylenglykole mit einem Schmelzpunkt kleiner 100°C, bevorzugt kleiner 50°C, besonders bevorzugt sind bei Raumtemperatur flüssige Polyalkylenglykole. Das zahlenmittlere Molekulargewicht bevorzugter Polyalkylenglykole liegt zwischen 200 und 10.000 g/mol.

Bevorzugt sind Polyethylenglykole mit einem zahlenmittleren Molekulargewicht von 200 g/mol (PEG 200), ca. 400 g/mol (PEG 400), ca. 600 g/mol (PEG 600), ca. 1000 g/mol (PEG 1000). Bevorzugt sind Polypropylenglykole mit einem zahlenmittleren Molekulargewicht von ca. 425 g/mol, ca. 725 g/mol, ca. 1000 g/mol, ca. 2000 g/mol, ca. 2700 g/mol und 3500 g/mol. Bevorzugt sind Blockcopolymere aus Polyethylenglycol (PEG) und Polypropylenglycol (PPG) vom Typ PEG-PPG und PEG-PPG-PEG, z.B. Poly(ethylenglycol)-block-poly(propylenglycol)-block-poly(ethylenglycol), bevorzugt mit einem PEG-Anteil von > 10 Gew.-%, besonders bevorzugt mit einem PEG-Anteil von > 30 Gew.-%.

Bevorzugt sind Polyalkylenglykol-funktionelle Silane und Siloxane. Beispiele für Silane sind Bis((3-Methyldimethoxysilyl)propyl)polypropylenoxid, 1,3-(Bis(3-Triethoxysilylpropyl)polyethylenoxy)-2-methylenpropan, Bis(3-Triethoxysilylpropyl)polyethylenoxid mit 25-30 EO-Einheiten, 2-(Methoxy(polyethylenoxy)$_{6-9}$propyl)dimethylmethoxysilane, 2-(Methoxy(polyethylenoxy)$_{6-9}$propyl)trimethoxysilan, Methoxytriethylenoxyundecyltrimethoxysilan und Bis(3-(triethoxysilylpropyl)-2-hydroxypropoxy)polyethylenoxid. Beispiele für Polyalkylenglykol-funktionelle Siloxane sind Block- und Pfropf-Copolymere bestehend aus Dimethylsiloxan- und Ethylenglykol-Einheiten.

Bestandteil (F3) ist eine (oder ein Gemisch jeweils mehrerer) Polyester-funktionelle(r) oder eine (oder ein Gemisch jeweils mehrerer) Kohlensäureester-funktionelle(r) Verbindung(en), die flüssig, amorph oder kristallin sein kann. Die Verbindungen können linear oder verzweigt sein.
Bevorzugt sind Polyester-funktionelle oder Kohlensäureester-funktionelle Verbindungen mit einem Schmelzpunkt kleiner 100°C, bevorzugt kleiner 50°C, besonders bevorzugt sind bei Raumtemperatur flüssige Polyester-funktionelle oder Kohlensäureester-funktionelle Verbindungen.
Das zahlenmittlere Molekulargewicht bevorzugter Polyesterfunktioneller oder Kohlensäureester-funktioneller Verbindungen liegt zwischen 200 und 2500 g/mol.
Flüssige Verbindungen sind bevorzugt. Auch Gemische mehrerer Verbindungen aus beiden Verbindungsklassen sind möglich. Geeignete Polyester-funktionelle Verbindungen sind z.B. Polyester-Polyole, die beispielsweise aus Dicarbonsäuren mit 2 bis 12 Kohlenstoffatomen, vorzugsweise 4 bis 6 Kohlenstoffatomen, und mehrwertigen Alkoholen hergestellt werden können. Dem Fachmann sind OH-funktionelle Polyester allgemein bekannt und sie sind kommerziell erhältlich. Insbesondere geeignet sind zwei oder drei endständige OH-Gruppen enthaltene Polyesterpolyole.

Des Weiteren können auch Kondensationsprodukte von ω-Hydroxycarbonsäuren wie zum Beispiel ω-Hydroxycapronsäure und bevorzugt Polymerisationsprodukte von Lactonen, beispielsweise gegebenenfalls substituierten ω-Caprolactonen eingesetzt werden.

Geeignete Kohlensäureester-funktionelle Verbindungen sind zum Beispiel Polycarbonat-Polyole und Polycarbonat-Polyester-Polyole.

Es können auch Block-Copolymere aus den genannten Verbindungsklassen und Gemische aus den oben genannten Verbindungen eingesetzt werden.

### Beispiele für Mehrwertige Alkohole

Beispiele für mehrwertige Alkohole sind Glykole mit 2 bis 10, vorzugsweise 2 bis 6 Kohlenstoffatomen, wie z.B. Ethylenglykol, Diethylenglykol, Polyethylenglykol, Dipropylenglykol, Polypropylenglykol, Dibutylenglykol und Polybutylenglykol, Butandiol-1,4, Pentandiol-1,5, Hexandiol-1,6, Decandiol-1,10, 2,2-Dimethylpropandiol-1,3, 2-Methyl-1,3-propandiol, Propandiol-1,3 und Dipropylenglykol, 1,4-Hydroxymethylcyclohexan, Butantriol-1,2,4, Triethylenglykol, Tetraethylenglykol,.

Je nach den gewünschten Eigenschaften können die mehrwertigen Alkohole allein oder gegebenenfalls in Mischung untereinander verwendet werden.

### Beispiele für Dicarbonsäuren

Als Dicarbonsäuren kommen beispielsweise in Betracht:

Aliphatische Dicarbonsäuren, wie Bernsteinsäure, Glutarsäure, Adipinsäure, Korksäure, Azelainsäure und Sebacinsäure und aromatische Dicarbonsäuren wie Phthalsäure, Isophthalsäure und Terephthalsäure. Die Dicarbonsäuren können einzeln oder als Gemische, z.B. in Form einer Bernstein-, Glutar- und Adipinsäuremischung verwendet werden.

### Beispiele für Kohlensäurederivate

Geeignet sind Ester der Kohlensäure mit den oben genannten mehrwertigen Alkoholen / Diolen, insbesondere solche mit 4 bis 6 Kohlenstoffatomen, wie Butandiol-1,4 und/oder Hexandiol-1,6.

### Beispiele für Polyester-Diole

Als Polyester-Diole vorzugsweise verwendet werden Ethandiolpolyadipate, 1,4-Butandiol-polyadipate, Ethandiol-1,4-butandiol-polyadipate, 1,6-Hexandiol-neopentylglykolpolyadipate, 1,6-Hexandiol-1,4-butandiol-polyadipate und Polycaprolactone.

Der Gehalt an (F) in der erfindungsgemäßen Siliconzusammensetzung beträgt 0,01-5,00 Gew.-%, vorzugsweise 0,05-3,00 Gew.-%, besonders bevorzugt 0,10-2,00 Gew.-%.

Bevorzugt wird (A) in Kombination mit (F1) eingesetzt.

**Bestandteil (G)** ist dem Fachmann bekannt und umfasst sämtliche optionale Zusätze, die in der erfindungsgemäßen Siliconzusammensetzung enthalten sein können, um spezielle Eigenschaftsprofile zu erzielen. Hierzu gehören Inhibitoren, Hitzestabilisatoren, Lösungsmittel, Weichmacher, Farbpigmente, Sensibilisatoren, Photoinitiatoren, Haftvermittler, Füllstoffe, Leitfähigkeitsadditive etc.

Der Gehalt der erfindungsgemäßen Siliconzusammensetzung an Bestandteil (G) beträgt 0 bis 30 Gew.-%, vorzugsweise 0 bis 10 Gew.-%, besonders bevorzugt 0 bis 5 Gew.-%.

Im Folgenden soll dargelegt werden, wie die Relaxationszeit $\tau$ und der nominelle Fließindex n, welche für die Verarbeitung von hochtransparanten Siliconzusammensetzungen im DOD-3D-Druckverfahren von entscheidender Bedeutung sind, gezielt eingestellt werden können.

Die als Bestandteil (A) aufgeführten Siliconharze haben im Wesentlichen die Aufgabe, die mechanische Festigkeit der Siliconformteile herbeizuführen, ohne deren Transparenz nachteilig zu beeinflussen, d.h., diese fungieren als Verstärkungsmittel. Andere übliche Verstärkungsmittel wie zum Beispiel hochdisperse Kieselsäuren oder andere bekannte verstärkende Füllstoffe führen zu transluzenten Formteilen und eignen sich daher nicht zur Herstellung hochtransparenter Siliconformteile. Im Vergleich zu diesen üblicherweise verwendeten verstärkenden Füllstoffen (z.B. hochdisperse Kieselsäuren) ist die verstärkende Wirkung der Siliconharze jedoch relativ gering und an das Vorhandensein vernetzungsfähiger Gruppen (z.B. Vinylgruppen) gebunden. Im Allgemeinen müssen daher höhere Gehalte an Siliconharzen gewählt werden, um ausreichende mechanische Eigenschaften zu erzielen.

Während die üblicherweise im Inkjet-Druckverfahren eingesetzten Materialien sehr niedrige Viskositäten aufweisen (typischerweise << 100 mPa·s) stellen die hier beanspruchten siliconharzhaltigen Siliconzusammensetzungen vergleichsweise hochviskose Materialien dar (typischerweise >> 1.000 mPa·s). Dieser Viskositätsunterschied bedingt, dass zwar mit den sehr niedrigviskosen Materialien Tröpfchengrößen im pl-Bereich (Pikoliter = $10^{-12}$ l) realisiert werden können, nicht jedoch mit den erfindungsgemäßen Siliconzusammensetzungen, deren Tröpfchenvolumina typischerweise größer sind, nämlich im nl-Bereich (Nanoliter = $10^{-9}$ l) liegen.

Um dennoch mit diesen relativ großen Tröpfchen Formteile mit feinen Details aufbauen zu können, müssen die Siliconzusammensetzungen im Wesentlichen zwei Randbedingungen erfüllen: Erstens muss unmittelbar nach dem Jetten ein hinreichend rascher Viskositätsanstieg und die Ausbildung einer Fließgrenze erfolgen. Diese Eigenschaft wird durch die Relaxationszeit $\tau$ charakterisiert. Zweitens muss die Siliconzusammmensetzung ein hinreichend starkes scherverdünnendes Verhalten aufweisen, um das Jetten feiner Tröpfchen zu ermöglichen. Diese Eigenschaft wird durch den nominellen Fließindex n charakterisiert.

**Einstellung der Relaxationszeit $\tau$:**

Bei Erhöhung der Schergeschwindigkeit einer Flüssigkeit lassen sich im Prinzip drei Verhaltensweisen unterscheiden:

Viskositätszunahme (dilatantes Verhalten), Viskositätsabnahme (scherverdünnendes Verhalten) und gleichbleibende Viskosität (newtonsches Verhalten). Silicone zeigen über einen weiten Bereich der Schergeschwindigkeit ein newtonsches Verhalten; erst bei sehr hohen Schergeschwindigkeiten erfolgt eine Viskositätsabnahme.

Aufgrund der sehr schwachen intermolekularen Wechselwirkungen zwischen den Siliconpolymerketten fehlt zudem eine Fließgrenze, d.h., dass bereits sehr schwache Scherkräfte ein Fließen der Silicone herbeiführen. Für das DOD 3D-Druckverfahren ist es jedoch wichtig, das die gejetteten Tröpfchen nach deren Deponierung nicht übermäßig auseinanderfließen, da dies den Druck feiner struktureller Details des herzustellenden Formteils (z.B. Kanten, Spitzen etc.) verhindern würde. Die Siliconzusammensetzung muss daher eine Fließgrenze aufweisen, die unmittelbar nach der Deponierung des Tröpfchens hinreichend schnell aufgebaut wird.

Siliconharz-basierte Siliconzusammensetzungen zeigen keine oder eine nur schwach ausgeprägte Fließgrenze. Dies hat zur Folge, dass die im Jetting-Verfahren deponierten Tröpfchen ein übermäßiges Auseinander- und Ineinanderfließen zeigen. Unter ungünstigen Bedingungen können die auf die Arbeitsfläche auftreffenden Tröpfchen sogar Spritzer bilden, ein Effekt, der in der Fachliteratur als *Splash* bekannt ist. Siliconharz-basierte Siliconzusammensetzungen müssen daher so additiviert werden, dass diese im Anschluss an das Jetten eine hinreichend rasche Viskositätserholung und Ausbildung einer Fließgrenze zeigen.

Die Geschwindigkeit, mit welcher dieser Viskositätsanstieg und damit die Ausbildung einer Fließgrenze erfolgt, wird durch die Relaxationszeit $\tau$ charakterisiert. Kurze Relaxationszeiten entsprechen einer raschen Viskositätszunahme und einem schnellen Strukturaufbau. Dieser Strukturaufbau erfolgt durch den Bestandteil (F) der erfindungsgemäßen Siliconzusammensetzungen im Zusammenspiel mit dem Siliconharz (A). Zwar besitzt bereits das Siliconharz (A) eine höhere Polarität und Oberflächenenergie als die wenig polaren und eine sehr niedrige Oberflächenenergie aufweisenden Siliconbestandteile (B) und (C), doch ist die dadurch verursachte Unverträglichkeit des Siliconharzes mit der Siliconmatrix zu gering, um eine hinreichend stabile Siliconharz-Netzwerkstruktur aufzubauen. Hingegen besitzt das rheologische Agens (F) eine deutlich höhere Polarität und Oberflächenenergie als die Bestandteile (A), (B) und (C), was zur Folge hat, dass das rheologische Agens (F) durch Wechselwirkung mit dem Siliconharz (A) die Polarität und Oberflächenenergie des Siliconharzes (A) erhöht, wodurch dieses infolge der erhöhten Unverträglichkeit mit den übrigen Siliconbestandteilen (B) und (C) ein auf physikalischen Wechselwirkungen beruhendes Netzwerk - und damit eine Fließgrenze - aufbaut.

Die Geschwindigkeit mit welcher dieses Netzwerk aufgebaut wird, hängt maßgeblich vom Grad der Unverträglichkeit zwischen dem durch das rheologische Additiv modifizierten Siliconharz und den übrigen Siliconbestandteilen ab: Je höher der Grad dieser Unverträglichkeit ist, desto rascher erfolgt die Strukturierung der Gesamtmasse und desto kürzere Relaxationszeiten werden erzielt.

Zu beachten ist jedoch, dass der Grad dieser mit dem rheologischen Agens erzielten Unverträglichkeit nicht so groß wird, dass es zur Phasenseparation der Bestandteile der Siliconzusammensetzung kommt. Des Weiteren ist zu beachten, dass das rheologische Agens nicht die Platin-katalysierte Additionsvernetzung beeinträchtigt. Diese Bedingungen werden besonders gut durch die unter (F1), (F2) und (F3) aufgeführten polaren Verbindungen erfüllt.

Damit wird verständlich, wie die Relaxationszeit mit Hilfe des rheologischen Agens (F) gezielt eingestellt werden kann. Die Relaxationszeit lässt sich verkürzen (und damit der Strukturaufbau beschleunigen), indem man (i) entweder den Gehalt an rheologischem Agens erhöht oder (ii) solche Agenzien (F) auswählt, die eine höhere Polarität und Oberflächenenergie besitzen. Die Relaxationszeit kann auch durch Verwendung (iii) niedrigerviskoser Siliconbestandteile oder (iv) höherpolarer Siliconharze verkürzt werden, was jedoch im Hinblick auf die gewünschten mechanischen Eigenschaften des Siliconformteils weniger erwünscht ist. Der Fachmann kann damit unter Berücksichtigung der sonstigen an die Siliconzusammensetzung zu stellenden Randbedingungen die am besten geeignete Methode auswählen. Die exakte Einstellung der Relaxationszeit $\tau$ lässt sich somit wie beschrieben durch einfache Routineexperimente erreichen.

**Einstellung des Fließindex n:**

Die Verwendung des rheologischen Agens (F) in Kombination mit einem Siliconharz (A) ist mit der Ausbildung einer auf physikalischen Wechselwirkungen beruhenden Siliconharz-Netzwerkstruktur verbunden, was eine Erhöhung der Viskosität und die Ausbildung einer Fließgrenze zur Folge hat. Für die Verarbeitbarkeit einer solchen Siliconzusammensetzung im DOD 3D-Druckverfahren ist es wichtig, dass die Masse bei Scherung eine ausreichende Viskositätsverringerung erfährt, um als feines Tröpfchen aus dem Druckventil gejettet werden zu können. Diese Viskositätsverringerung bei Erhöhung der Schergeschwindigkeit bezeichnet man als scherverdünnendes Verhalten und lässt sich mit Hilfe des nominellen Fließindex n quantifizieren. Scherverdünnendes Verhalten liegt vor, wenn der nominelle Fließindex n negative Werte annimmt.

Siliconzusammensetzungen weisen in der Regel ein scherverdünnendes Verhalten auf, d.h., der nominelle Fließindex n ist negativ. Überraschend wurde jedoch festgestellt, dass unabhängig von der Verarbeitbarkeit der Siliconmasse, welche bei einer hinreichend niedrigen Viskosität unter starker Scherung durchaus gegeben sein kann, nur dann ein befriedigendes Druckbild im DOD-3D-Druckverfahren erhalten wird, wenn der nominelle Fließindex n in einem bestimmten Bereich liegt. Es ist also durchaus möglich, dass eine bei hoher Scherung niedriger viskose Masse ein schlechteres Druckbild liefert als eine bei gleich hoher Scherung höher viskose Masse. Als entscheidend erweist sich vielmehr der Grad des scherverdünnenden Verhaltens, d.h., wie stark die bei Erhöhung der Schergeschwindigkeit auftretende Viskositätsabnahme ist.

In anderen Worten: Eine hinreichend niedrige Viskosität bei hoher Scherrate ist eine zwar notwendige Bedingung für die Verarbeitbarkeit im DOD-Verfahren, sie ist aber keine hinreichende Bedingung für ein gutes Druckbild. Eine notwendige und zugleich hinreichende Bedingung dafür stellt die oben genannte Relation -1 < n < -0,10 dar (in Kombination mit einer Relaxationszeit im erfindungsgemäßen Bereich).

Es ergeben sich grundsätzlich folgende Möglichkeiten, um den nominellen Fließindex n in den erfindungsgemäßen Bereich zu bringen:

Wie im Fall der Einstellung der Relaxationszeit erweist sich die Einstellung des scherverdünnenden Verhaltens durch geeignete Wahl des rheologischen Agens (F) am effektivsten. Insbesondere ist es möglich, die Oberflächenenergie des Siliconharzes (A) mittels (F) so einzustellen, dass die Siliconharzteilchen in der hydrophoben, unpolaren Siliconmatrix ein auf physikalischen Wechselwirkungen beruhendes Netzwerk aufbauen. Dieses Netzwerk behindert im Ruhezustand die Fließfähigkeit der Siliconbestandteile, bricht jedoch zusammen, sobald eine stärkere Scherung der Siliconzusammensetzung erfolgt, d.h., bei starker Scherung nimmt die Fließfähigkeit der Siliconbestandteile stark zu, was gleichbedeutend mit einem ausgeprägten scherverdünnenden Verhalten ist.

Der durch die starke Scherung im Jetting-Verfahren herbeigeführte Abbau des Siliconharz-Netzwerks ist reversibel, d.h., nach Wegfall der Scherung kehrt die Masse in den ursprünglichen Gleichgewichtszustand zurück (Relaxation).

Erweist sich der nominelle Fließindex n somit als zu hoch, d.h. > -0,10 (entsprechend einer zu geringen Scherverdünnung), kann dem durch (i) Erniedrigung der Hydrophobizität des Siliconharzes, (ii) durch Erhöhung der Siliconharzkonzentration und insbesondere (iii) durch Erhöhung des Gehaltes an rheologischem Agens (F) und/oder (iv) durch Auswahl eines rheologischen Agens (F) mit höherer Polarität bzw. Oberflächenenergie entgegengewirkt werden.

Eine zu starke Strukturbildung in der Siliconzusammensetzung, die sich in extrem niedrigen Werten des Fließindex äußern würde (n < - 1.00), muss jedoch vermieden werden, da diese das Jetten feiner Tröpfchen unterbinden würde. Der Fachmann kann damit unter Berücksichtigung der sonstigen an die Siliconzusammensetzung zu stellenden Randbedingungen die am besten geeignete Methode auswählen. Die exakte Einstellung des nominellen Fließindex n lässt sich somit wie beschrieben durch einfache Routineexperimente erreichen.

Viskositätsbestimmung

Die Viskositäten der einzelnen Bestandteile der Siliconzusammensetzungen werden an einem Rheometer "MCR 302" der Fa. Anton Paar nach DIN EN ISO 3219: 1994 und DIN 53019 gemessen, wobei ein Kegel-Platte-System (Kegel CP50-2) mit einem Öffnungswinkel von 2° verwendet wurde. Die Kalibrierung des Gerätes erfolgte mit Normalöl 10000 der Physikalisch-Technischen Bundesanstalt. Die Messtemperatur beträgt 25,00°C +/- 0,05°C, die Messzeit 3 min. Die Viskositätsangabe stellt den arithmetischen Mittelwert von drei unabhängig durchgeführten Einzelmessungen dar. Die Messunsicherheit der dynamischen Viskosität beträgt 1,5 %. Der Schergeschwindigkeitsgradient wurde in Abhängigkeit von der Viskosität gewählt und wird für jede Viskositätsangabe separat ausgewiesen.

Rheologische Messmethode zur Bestimmung der Relaxationszeit $\tau$ und des nominellen Fließindex n der Siliconzusammensetzungen

Alle Messungen wurden auf einem Rheometer MCR 302 mit Luftlagerung der Firma Anton Paar bei 25°C, sofern nicht anders genannt, gemäß DIN EN ISO 3219 durchgeführt. Es wurde mit Platte-Platte-Geometrie (Durchmesser 25 mm) bei einer Spaltweite von 300 $\mu$m gemessen. Überschüssiges Probenmaterial wurde nach Anfahren des Messspaltes mittels Holzspatel entfernt (s.g. trimmen).

Vor dem Start des eigentlichen Messprofils wurde die Probe einer definierten Vorscherung unterworfen, um die rheologische Historie aus Probenauftrag und Anfahren der Messposition zu beseitigen. Diese Vorscherung (Messphase 1) umfasst eine Scherphase von 60 s bei einer Scherrate von $V_1 = 0,5$ s$^{-1}$, wobei sich sehr schnell ein konstant bleibender Viskositätswert $\eta_{MP1}$ (am Ende von Messphase 1) einstellt. Unmittelbar anschließend erfolgt eine 60 s während starke Scherung bei einer Scherrate von $v_2 = 25$ s$^{-1}$ (Messphase 2), wodurch die Viskosität infolge des scherverdünnenden Verhaltens schlagartig auf einen sehr niedrigen, konstant bleibenden Wert $\eta_{MP2}$ (am Ende der Messphase 2) abfällt.

In der sich unmittelbar anschließenden Messphase 3, die 60 s andauert, erfolgt eine schwache Scherung bei $v_3 = 0,5$ s$^{-1}$, wobei sich, je nach Relaxationsgeschwindigkeit, eine rasche Zunahme der Viskosität bis nahezu auf das Ausgangsniveau (welches sich zum Ende der Messphase 1 eingestellt hatte) zeigt. Der zeitliche Verlauf der Viskosität $\eta(t)$ während der Messphase 3 wurde mittels der Funktion entsprechend Formel (V)

$$\eta(t) = \eta_{max} + (\eta_0 - \eta_{max}) * \mathrm{EXP}(-t/\tau), \qquad (V)$$

approximiert, wobei $\eta(t)$ die Viskosität zum Zeitpunkt t ist, beginnend mit t=0 unmittelbar am Ende von Messphase 2, $\eta_{max}$ die in der Messphase 3 erreichte maximale Viskosität bezeichnet, $\eta_0$ die unmittelbar am Ende der Messphase 2 (also zum Zeitpunkt t=0) gemessene Viskosität ist und EXP die e-Funktion bedeutet. Die so definierte Relaxationszeit $\tau$ beschreibt, wie schnell sich die Viskosität einer stark gescherten Masse erholt, wenn die Scherung (nahezu) abgestellt wird. In der Messphase 3 wurden 60 Messpunkte ($\eta$,t) aufgezeichnet ($\eta_1$, 1), ($\eta_2$, 2) ,..., ($\eta_{60}$, 60) und (gemeinsam mit dem Wertepaar ($\eta_0$, 0)) in ein EXCEL®-Format übertragen. Die Bestimmung des in Formel (V) frei wählbaren Parameters $\tau$ erfolgte, indem die Summe der Fehlerquadrate zwischen den experimentell bestimmten Viskositätswerten und den nach Formel (V) berechneten Viskositätswerten durch Variation des Parameters $\tau$ minimiert wurde, d.h., $\tau$ wurde so berechnet, dass die experimentell bestimmten ($\eta$,t)-Werte bestmöglich (im Sinne der kleinsten Summe der Fehlerquadrate) durch die Funktion (V) beschrieben werden. Die Approximation wurde mit Hilfe des in EXCEL® verfügbaren Programms "Solver" mit der Lösungsmethode (Solving method) "GRG Nonlinear" durchgeführt. Es zeigte sich, dass das Viskositäts-Relaxationsverhalten der Siliconzusammensetzungen mittels der Formel (V), insbesondere anhand des Parameters $\tau$ (Relaxationszeit), ausgezeichnet beschrieben werden kann.

Die Bestimmung des nominellen Fließindex n sowie des nominellen Konsistenzindex K nach Formel (VI)

$$\log \eta = \log K + n * \log v, \qquad (VI)$$

erfolgte mit Hilfe der beiden Wertepaare ($v_1$; $\eta_{MP1}$) und ($v_2$; $\eta_{MP2}$) durch Einsetzen in Formel (VI) (zwei Gleichungen mit zwei Unbekannten).

Erfindungsgemäße Silikonzusammensetzungen können ein-, zwei- oder mehrkomponentig hergestellt werden. Im einfachsten Fall erfolgt die Herstellung als einkomponentige erfindungsgemäße Silikonzusammensetzung durch gleichmäßiges Vermischen aller Komponenten.

Die erfindungsgemäßen harzverstärkten Siliconzusammensetzungen werden zur Herstellung von Formkörpern mittels ballistischer generativer DOD-Verfahren (3D-Druck) verwendet.

Ein weiterer Gegenstand der vorliegenden Erfindung ist daher ein Verfahren zur Herstellung von Siliconformkörpern, dadurch gekennzeichnet, dass die Formkörper aus den erfindungsgemäßen Silikonzusammensetzungen mittels ballistischer generativer DOD-Verfahren (3D-Druck) aufgebaut werden.

**Beispiele**

Die folgenden Beispiele dienen der Erläuterung der Erfindung ohne diese zu beschränken.

Rheologische Messmethode

Sie erfolgte in den Beispielen analog wie oben beschrieben.

Konditionierung der Siliconzusammensetzungen

Die für den DOD-3D-Druck verwendeten Siliconzusammensetzungen wurden sämtlich vor der Verarbeitung entflüchtigt, indem 100 g der Masse in einer offenen PE-Dose in einem Exsikkator 3h bei einem Vakuum von 10 mbar und Raumtemperatur gelagert wurden. Anschließend wurde die Masse in eine 30ml-Kartusche mit Bajonettverschluss luftfrei abgefüllt und mit einem passenden Auspress-Stempel (Kunststoffkolben) verschlossen.

Die Luerlock Kartusche wurde dann in die vertikale Kartuschenhalterung des Vermes-Dosierventils flüssigkeitsdicht mit der Luerlock-Verschraubung nach unten eingeschraubt und der Druck-Stempel an der Kartuschenoberseite mit 3-8 bar Druckluft beaufschlagt; der in der Kartusche befindliche Auspress-Stempel verhindert, dass die Druckluft in die zuvor evakuierte Siliconzusammensetzung gelangen kann.

Alle UV-empfindlichen Silicon-Massen wurden unter Gelblicht (unter Ausschluss von Licht unterhalb 700 nm) hergestellt, analog entflüchtigt und in lichtundurchlässige 30 ml Kartuschen mit Luerlock-Bajonettverschluss abgefüllt.

Um zu verhindern, dass die Siliconzusammensetzungen beim Lagern Luft aufnehmen, wurden die Kartuschengebinde mit Alukaschierten PE-Inlinern mit einem Vakuumschweissgerät der Fa. Landig + Lava GmbH & Co. KG, Valentinstraße 35 - 1,D-88348 Bad Saulgau, unter Vakuum verpackt.

Verwendete Rohstoffe und Siliconzusammensetzungen

Organosiliconharz gemäß Bestandteil (A):

**A1**: Ein vinylfunktionalisiertes MQ-Siliconharzpulver aus M-, $M^{vinyl}$- und Q-Struktureinheiten mit einem Molekulargewicht: Mw = 5.300 g/mol, Mn = 2.400 g/mol, einem Vinylgehalt von 70 mmol Vinyl/100 g und einem Verhältnis von $M^{vinyl}$ : M : Q = 0,09 : 0,72 : 1,00.

Vinyl-funktionelle Polyorganosiloxane gemäß Bestandteil (B):

**B1**: Vinyldimethylsiloxy-endständiges Polydimethylsiloxan mit einer Viskosität von 1.000 cSt., erhältlich bei ABCR GmbH, Karlsruhe, Deutschland unter der Produktbezeichnung "Poly(dimethylsiloxane), vinyldimethylsiloxy terminated; viscosity 1000 cSt.", Best.-Nr. AB109358, CAS-Nr. [68083-19-2].

**B2**: Vinyldimethylsiloxy-endständiges Polydimethylsiloxan mit einer Viskosität von 20.000 cSt., erhältlich bei ABCR GmbH, Karlsruhe, Deutschland unter der Produktbezeichnung "Poly(dimethylsiloxane), vinyldimethylsiloxy terminated; viscosity 20000 cSt.", Best.-Nr. AB128873, CAS [68083-19-2] (ABCR-Katalog).

**B3**: Vinyldimethylsiloxy-endständiges Polydimethylsiloxan mit einer Viskosität von 100.000 cSt., erhältlich bei ABCR GmbH, Karlsruhe, Deutschland unter der Produktbezeichnung "Poly(dimethylsiloxane), vinyldimethylsiloxy terminated; viscosity 100.000 cSt.", DMS-V51, CAS [68083-19-2] (ABCR-Katalog) .

SiH-funktionelle Siloxane gemäß Bestandteil (C):

**C1**: SiH-endständiges Polydimethylsiloxan mit einem Molekulargewicht von Mn = 28.000 g/mol, einer Viskosität von 1000 mPa.s und einem Wasserstoffgehalt (Si-gebunden) von 0,007 Gew.-%, erhältlich bei Gelest, Inc. (65933 Frankfurt am Main, Deutschland) unter der Produktbezeichnung DMS-H31.

**C2**: Methylhydrosiloxan-Dimethylsiloxan-Copolymer mit einem Molekulargewicht von Mn = 1.900-2.000 g/mol und einem Methylhydrogensiloxy-Gehalt von 25-30 Mol-%, erhältlich bei Gelest, Inc. (65933 Frankfurt am Main, Deutschland) unter der Produktbezeichnung HMS-301.

**C3**: Methylhydrosiloxan-Dimethylsiloxan-Copolymer mit einem Molekulargewicht von Mn = 900-1.200 g/mol und einem Methylhydrogensiloxy-Gehalt von 50-55 Mol-%, erhältlich bei Gelest, Inc. (65933 Frankfurt am Main, Deutschland) unter der Produktbezeichnung HMS-501.

Hydrosilylierungskatalysator gemäß Bestandteil (E):

**E1:** UV-aktivierbarer Platinkatalysator: Trimethyl-(methylcyclopentadienyl)-platin(IV), erhältlich bei Sigma-Aldrich®, Taufkirchen, Deutschland.

Rheologisches Agens gemäß Bestandteil (F):

**F1**: (3-Glycidoxypropyl)trimethoxysilan, 98%, erhältlich bei ABCR GmbH, 76187 Karlsruhe, Deutschland, CAS-Nr.

[2530-83-8], unter der Artikel-Nr./Produktbezeichnung AB111152

**F2**: Epoxidiertes Leinöl, CAS-Nr. 67746-08-1, "Edenol® B 316 Spezial"; Fa. Emery Oleochemicals GmbH, Henkelstr. 67, 40589 Düsseldorf,

**F3**: DRAPEX 39, ein epoxidiertes Sojabohnenöl der Firma Galata Chemicals GmbH, Chemiestraße 22, 68623 Lampertheim, CAS-Nr. [801307-8]

Optionaler Bestandteil (G)

**G1**: Stabilisator (Inhibitor) 1-Ethinylcyclohexanol; 99%, CAS-Nr. 78-27-3, ≥99%, erhältlich bei ABCR GmbH, 76187 Karlsruhe, Deutschland

Erfindungsgemäße sowie nicht erfindungsgemäße Beispiele 1-24:

Die Herstellung der Siliconzusammensetzungen erfolgte (unter Gelblicht bzw. Lichtausschluß) durch inniges Vermischen aller Bestandteile entsprechend der in den nachfolgenden Tabellen angegebenen Gewichtsverhältnisse in Speedmixer®-Mischbechern mit Schraubverschluß der Fa. Hauschild & Co. KG, Waterkamp 1, 59075 Hamm. Dazu wurden die Komponenten nacheinander in den entsprechenden Mischbecher eingewogen und manuell gemischt. Anschließend wurde der mit einem passenden Schraubdeckel verschlossene Becher in einem Vakuum-Speedmixer® DAC 400.2 VAC-P der Fa. Hauschild & Co. KG, Waterkamp 1, 59075 Hamm mindestens 5 Minuten lang bei 1500 UMin$^{-1}$ unter einem Vakuum von 100 mbar gemischt und entgast.

In den Schraubdeckel wurde vor dem Vakuum-Mischvorgang im Vakuum-Speedmixer® ein kleines Loch gebohrt, um die Luft aus dem Mischbecher entweichen zu lassen.

Anschließend wurde die Masse aus dem Mischbecher in eine lichtdichte 30 ml-Luerlock-Kartusche luftfrei abgefüllt (mit Hilfe eines Abfüllsystems der Fa. Hauschild, bestehend aus einer passenden Speed-Disc und einer Hebelpresse). Anschließend wurde die Kartusche mit einem passenden Auspress-Stempel (Kunststoffkolben) verschlossen.

Die Zusammensetzungen der erfindungsgemäßen und nicht erfindungsgemäßen Siliconzusammensetzungen sind in den Tabellen 1 bis 4 angegeben.

Tabelle 1

| Bestandteil | Bsp.1 | Bsp.2*) | Bsp.3*) | Bsp.4*) | Bsp.5*) | Bsp.6*) |
|---|---|---|---|---|---|---|
| A1 | 54,5 | 28,2 | 27,2 | 27,0 | 44,5 | 39,7 |
| B1 | 9,2 | 14,1 | 13,6 | 9,5 | 9,4 | 45,2 |
| B2 | 25,2 | 42,4 | 40,8 | 56,0 | 37,6 | - |
| C2 | - | - | - | 7,5 | - | 15,1 |
| C3 | 10,1 | 14,3 | 18,4 | - | 8,5 | - |
| E1 | 0,0015 | 0,0015 | 0,0015 | 0,0015 | 0,0015 | 0,0015 |
| F1 | 1,00 | 1,00 | - | - | - | - |
| G1 | 0,0025 | 0,0025 | 0,0025 | 0,0025 | 0,0025 | 0,0025 |
| Nomineller Fließindex n | | | | | | |
| n [-] | -0,70 | -0,31 | -0,003 | 0 | -0,008 | -0,005 |
| Nomineller Konsistenzindex K | | | | | | |
| K [Pa.s$^{n+1}$] | 487 | 35 | 6 | 10 | 33 | 2 |
| Relaxationszeit τ | | | | | | |
| τ [s] | 8,22 | <0,001 | <0,001 | <0,001 | 5,34 | <0,001 |
| *) nicht erfindungsgemäß | | | | | | |

Im nicht erfindungsgemäßen Beispiel 2 erfolgt der Strukturaufbau bzw. die Viskositätszunahme zu schnell, so dass sich eine zu geringe Relaxationszeit τ ergibt. Durch den Einsatz von F1 ist zwar eine Struktur im Ruhezustand vorhanden (scherverdünnend wie n = -0.31 zeigt), doch ist die Ruheviskosität der Masse in Beispiel 2 wegen des geringen Gehaltes an A1 und des hohen Gehaltes an B1 und B2 viel niedriger als in Beispiel 1, so dass diese niedrige Viskosität nach Wegfall der Scherung sich praktisch sofort wieder einstellt (zu kurze Relaxationszeit). Zum Beispiel durch Verringerung des Gehalts an Siliconbestandteilen B1 und B2 und/oder durch Erhöhung der Viskosität dieser Bestandteile lässt sich die Relaxationszeit so einstellen, dass sie im beanspruchten Bereich liegt.

Die nicht erfindungsgemäßen Beispiele 3 bis 6 enthalten kein rheologisches Agens (F), sodass sich hier ein zu hoher Fließindex n ergibt, d.h. es liegt kein bzw. kein ausreichend scherverdünnendes Verhalten vor. Durch Einsatz eines rheologischen Agens (F) in ausreichender Menge lässt sich der Fließindex so einstellen, dass er im beanspruchten Bereich liegt.

Tabelle 2

| Bestandteil | Bsp.7[*] | Bsp.8 | Bsp.9 | Bsp.10[*] | Bsp.11[*] | Bsp.12[*] |
|---|---|---|---|---|---|---|
| A1 | 39,3 | 38,9 | 40,4 | 25,9 | 44,6 | 42,7 |
| B1 | 44,8 | 44,3 | 46,1 | 13,4 | 9,4 | 48,7 |
| B2 | - | - | - | 48,4 | 37,7 | - |
| C2 | 14,9 | 14,8 | - | - | - | - |
| C3 | - | - | 11,5 | 12,3 | 8,4 | 8,6 |
| E1 | 0,0015 | 0,0015 | 0,0015 | 0,0015 | 0,0015 | 0,0015 |
| F1 | 1,00 | 2,00 | 2,00 | - | - | - |
| G1 | 0,0025 | 0,0025 | 0,0025 | 0,0025 | 0,0025 | 0,0025 |
| Nomineller Fließindex n | | | | | | |
| n [-] | 0 | -0,49 | -0,39 | 0 | 0 | 0 |
| Nomineller Konsistenzindex K | | | | | | |
| K [Pa.s$^{n+1}$] | 3 | 26 | 20 | 7 | 40 | 7 |
| Relaxationszeit τ | | | | | | |
| τ [s] | <0,001 | 5,31 | 11,39 | <0,001 | <0,001 | <0,001 |
| [*] nicht erfindungsgemäß | | | | | | |

Nicht erfindungsgemäßes Beispiel 7 besitzt einen Fließindex von n = 0 (newtonsches Verhalten), d.h. es liegt kein scherverdünnendes Verhalten vor. In Beispiel 7 wird somit trotz des Vorliegens von Harzteilchen und F1 im Ruhezustand keine Struktur (Netzwerk) aufgebaut. Dadurch, dass Beispiel 7 newtonsches Verhalten aufweist, ist auch die Relaxationszeit unendlich hoch (Ausgangsviskosität ist auf der Stelle erreicht, da sie sich nicht geändert hat). Wird der Gehalt an F1 erhöht (vgl. Beispiele 8 und 9), erfolgt im Ruhezustand der Strukturaufbau und die Masse verhält sich scherverdünnend (n wird negativ). Nach Scherung benötigen nun die mit einer erhöhten Menge F1 modifizierten Harzteilchen eine gewisse Zeit (die Relaxationszeit), um die Struktur wieder auszubilden.

Die nicht erfindungsgemäßen Beispiele 10 bis 12 enthalten kein rheologisches Agens (F), sodass sich jeweils nur ein Fließindex n von 0 ergibt, d.h. es liegt kein scherverdünnendes Verhalten vor. Durch Einsatz eines rheologischen Agens (F) in ausreichender Menge lässt sich der Fließindex so einstellen, dass er im beanspruchten Bereich liegt (vgl. Beispiel 8 und 9).

Tabelle 3

| Bestandteil | Bsp.13 | Bsp.14 | Bsp.15 | Bsp.16 | Bsp.17 | Bsp.18 |
|---|---|---|---|---|---|---|
| A1 | 25,6 | 44,2 | 42,3 | 25,4 | 43,7 | 41,9 |
| B1 | 13,3 | 9,3 | 48,2 | 13,2 | 9,2 | 47,7 |
| B2 | 48,0 | 37,3 | - | 47,5 | 37,0 | - |
| C3 | 12,2 | 8,3 | 8,6 | 12,1 | 8,2 | 8,5 |
| E1 | 0,0015 | 0,0015 | 0,0015 | 0,0015 | 0,0015 | 0,0015 |
| F1 | 1,00 | 1,00 | 1,00 | 2,00 | 2,00 | 2,00 |

(fortgesetzt)

| Bestandteil | Bsp.13 | Bsp.14 | Bsp.15 | Bsp.16 | Bsp.17 | Bsp.18 |
|---|---|---|---|---|---|---|
| G1 | 0,0025 | 0,0025 | 0,0025 | 0,0025 | 0,0025 | 0,0025 |
| Nomineller Fließindex n | | | | | | |
| n [-] | -0,11 | -0,78 | -0,43 | -0,15 | -0,77 | -0,56 |
| Nomineller Konsistenzindex K | | | | | | |
| K [Pa.s$^{n+1}$] | 17 | 630 | 40 | 21 | 640 | 73 |
| Relaxationszeit $\tau$ | | | | | | |
| $\tau$ [s] | 5,50 | 3,89 | 7,92 | 4,74 | 2,60 | 2,01 |
| *) nicht erfindungsgemäß | | | | | | |

Tabelle 4:

| Bestandteil | Bsp.19*) | Bsp.20 | Bsp.21*) | Bsp.22 | Bsp.23 | Bsp.24*) |
|---|---|---|---|---|---|---|
| A1 | 27,3 | 38,8 | 39,2 | 38,9 | 38,9 | 36,3 |
| B1 | - | 38,8 | 39,3 | 39,0 | 39,0 | - |
| B2 | 45,9 | - | - | - | - | 15,6 |
| B3 | 18,6 | - | - | - | - | 40,6 |
| C1 | - | 11,3 | 11,4 | 11,3 | 11,3 | - |
| C3 | 8,0 | 10,0 | 10,1 | 10,0 | 10,0 | 7,5 |
| E1 | 0,0015 | 0,0015 | 0,0015 | 0,0015 | 0,0015 | 0,0015 |
| F1 | - | 1,14 | - | - | - | - |
| F2 | - | - | - | 0,79 | - | - |
| F3 | - | - | - | - | 0,79 | - |
| G1 | 0,0025 | 0,0025 | 0,0025 | 0,0025 | 0,0025 | 0,0025 |
| Nomineller Fließindex n | | | | | | |
| n [-] | -0,003 | -0,77 | -0,001 | -0,79 | -0,79 | -0,004 |
| Nomineller Konsistenzindex K | | | | | | |
| K [Pa.s$^{n+1}$] | 17 | 165 | 3 | 210 | 201 | 21 |
| Relaxationszeit $\tau$ | | | | | | |
| $\tau$ [s] | 5,51 | 2,53 | <0,001 | 2,59 | 2,23 | <0,001 |
| *) nicht erfindungsgemäß | | | | | | |

Die nicht erfindungsgemäßen Beispiele 19, 21 und 24 enthalten kein rheologisches Agens (F), sodass sich hier ein zu hoher Fließindex n ergibt, d.h. es liegt kein ausreichend scherverdünnendes Verhalten vor. Durch Einsatz eines rheologischen Agens (F) in ausreichender Menge lässt sich der Fließindex so einstellen, dass er im beanspruchten Bereich liegt (vgl. erfindungsgemäße Beispiele 20, 22 und 23).

DOD-3D-Drucker:

Die hergestellten Siliconzusammensetzungen wurden im DOD-Verfahren in einer Fertigungsanlage "NEO-3D-Drucker" der Firma "German RepRap GmbH" zu Siliconelastomerteilen verarbeitet. Hierfür wurde der o.g. 3D-Drucker umgebaut und angepasst. Die ursprünglich im "NEO-3D-Drucker" montierte Thermoplast-Filament-Dosiereinheit wurde durch eine Jetting-Düse der Firma "Vermes Microdispensing GmbH, Otterfing" ersetzt, um höherviskose bis standfest-pastöse Massen wie die erfindungsgemäßen Siliconzusammensetzungen im DOD-Verfahren abscheiden zu können.

Da der "NEO"-Drucker für die Installation von Jetting-Düsen nicht standardmäßig ausgerüstet war, wurde er modifiziert. Die Vermes-Jetting-Düse wurde so in die Drucker-Steuerung eingebunden, dass das Start-Stopp-Signal (Triggersignal) der Vermes-Jetting-Düse von der G-Code-Steuerung des Druckers betätigt wurde. Dazu wurde in der G-Code-Steuerung ein spezielles Signal hinterlegt. Die G-Code-Steuerung des Computers schaltete damit lediglich die Jetting-Düse ein und aus (Start und Stopp der Dosierung).

Für die Signalübertragung des Start-Stopp-Signals wurde das Heizkabel der ursprünglich installierten Filament-Heizdüse des "NEO"-Druckers getrennt und über ein Relais mit der Vermes-Düse verbunden.

Die übrigen Dosierparameter (Dosier-Frequenz, Rising, Falling usw.) der Vermes-Jetting-Düse wurden mittels der MDC 3200+ Microdispensing Control Unit eingestellt.

Die Steuerung des 3D-Druckers erfolgte mittels eines Computers. Die Software-Steuerung und Steuersignal-Anbindung des 3D-Druckers (Software: "Repitier-Host") wurde dahingehend modifiziert, dass damit sowohl die Bewegung der Dosierdüse in den drei Raumrichtungen gesteuert werden konnte als auch das Signal zur Tropfenabscheidung. Die maximale Verfahrgeschwindigkeit des "NEO"-3D-Druckers beträgt 0,3 m/s.

Dosiersystem:

Als Dosiersystem für die verwendeten Siliconzusammensetzungen diente das Microdispensing-Dosiersystem "MDV 3200A" der Firma "Vermes Microdispensing GmbH", bestehend aus einem Komplettsystem mit folgenden Komponenten: a) MDV 3200 A-Düseneinheit mit einem Anschluss für Luerlock Kartuschen, welche an der Kartuschenoberseite mit 3-8 bar Druckluft (Schlauch mit Adapter) beaufschlagt wurden, b) Vermes Begleit-Düsenheizungs-System MDH-230tfl links, c) MDC 3200+ MicroDispensing Control Unit, die wiederum mit der PC-Steuerung verbunden war sowie über bewegliche Kabel mit der Düse, ermöglichte die Einstellung der Jetting Dosier-Parameter (Rising, Falling, Opentime, Needlelift, Delay, No Puls, Heater, Düse, Abstand, Voxeldurchmesser, Luft-Vordruck an der Kartusche). Es stehen Düsen mit Durchmessern von 50, 100, 150 und 200 $\mu$m zur Verfügung. Damit ließen sich feinste Tröpfchen der Siliconzusammensetzung im Nanoliter-Bereich auf jeder beliebigen xyz-Position der Arbeitsplatte bzw. der bereits vernetzten Siliconelastomerschicht punktgenau platzieren. Sofern nicht anders angegeben, wurde im Vermes-Ventil als Standard-Düseneinsatz eine 200 $\mu$m Düse eingebaut. Als Vorratsbehälter für die Siliconzusammensetzung dienten senkrecht stehende 30 ml Luerlock Kartuschen, die flüssigkeitsdicht an die Dispensing-Düse aufgeschraubt und mit Druckluft beaufschlagt wurden.

Die Steuerung des modifizierten "NEO"-3D-Druckers und des "Vermes"-Dosiersystems erfolgte mit einem PC und einer Open-Source-Software "Simplify 3D".

Jetting:

Die Siliconzusammensetzungen wurden mit den nachfolgend angegebenen Jetting-Düsenparametern auf einem Glas-Objektträger der Fläche 25 x 75 mm tröpfchenweise in Schichten der gewünschten Geometrie wiederholt abgeschieden, wobei die abgeschiedene Masse während des gesamten Druckvorgangs (ca. 50 sec) mit einem BLUEPOINT-Bestrahlungssystem mit einer Leistung von 13.200 mW/cm$^2$ kontinuierlich bestrahlt und dadurch vernetzt wurde. Düsendurchmesser: 200 pm, Rising: 0,3 ms, Falling: 0,1 ms, Open Time: 15 ms, Needle Lift: 100%, Delay (Flächendruck): 25 ms, Delay (Einzelpunkte für Voxelgröße-Messung): 100 ms, Heizung: 45°C, Kartuschen-Vordruck: 3 bar.

In den Tabellen 1-4 sind die erfindungsgemäßen und nicht erfindungsgemäßen Siliconzusammensetzungen mit den charakteristischen rheologischen Parametern (Relaxationszeit $\tau$ und nomineller Fließindex n) aufgeführt.

Auf die oben beschriebene Weise wurden mit den erfindungsgemäßen Siliconzusammensetzungen im DOD-Verfahren problemlos transparente Siliconelastomerteile unterschiedlicher Geometrie erhalten, während die nicht erfindungsgemäßen Siliconzusammensetzungen bei der DOD-Verarbeitung zahlreiche Unzulänglichkeiten aufwiesen, die eine Herstellung qualitativ hochwertiger Siliconformteile verhinderten. Stellvertretend für die in den Tabellen 1-4 aufgeführten erfindungsgemäßen Siliconzusammensetzungen zeigen die Abbildungen 1 und 2 die gemäß Beispiel 1 und Beispiel 8 im DOD-Verfahren hergestellten Siliconformkörper. Stellvertretend für die in den Tabellen 1-4 aufgeführten nicht erfindungsgemäßen Siliconzusammensetzungen zeigen die Abbildungen 4 und 5 die gemäß Beispiel 2 und Beispiel 3 im DOD-Verfahren hergestellten Siliconformkörper.

Beispiel 1:

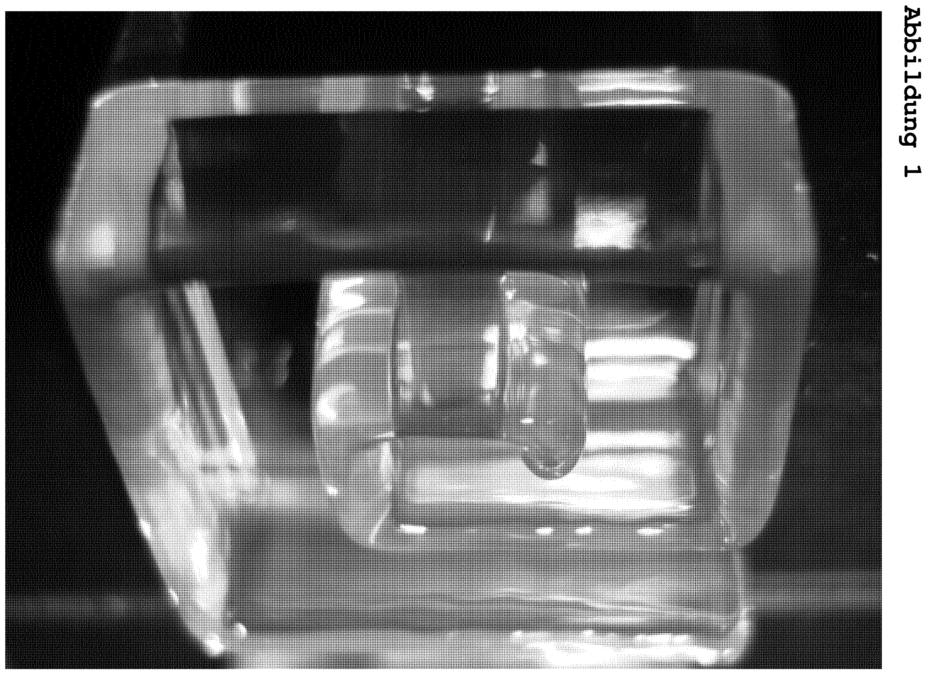

Die erfindungsgemäße Siliconzusammensetzung weist einen nominellen Fließindex von n = -0,70 und eine Relaxationszeit von $\tau$ = 8,22 sec auf und ließ sich problemlos im DOD-Verfahren jetten (Voxeldurchmesser 1,1 mm) und schichtweise zu einer transparenten Rechteck-Spirale mit Außenumfang 20 x 20 mm und einer Höhe von 5 mm (siehe Abbildung 1) aufbauen.

Beispiel 8:

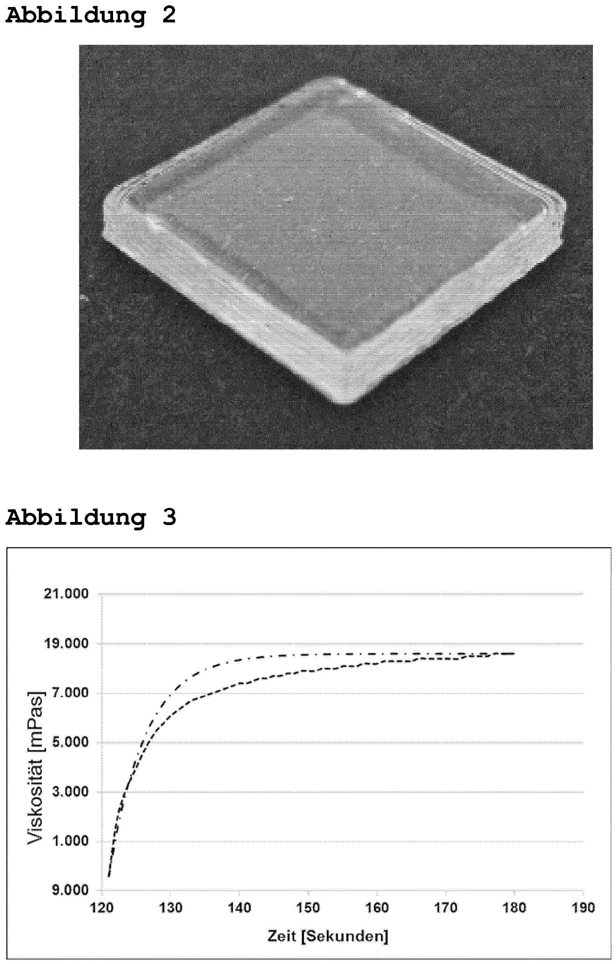

Die erfindungsgemäße Siliconzusammensetzung weist einen nominellen Fließindex von n = -0,49 und eine Relaxationszeit von τ = 5,31 sec auf und ließ sich problemlos im DOD-Verfahren jetten (Voxeldurchmesser 0,9 mm) und schichtweise zu einem quaderförmigen Siliconelastomerteil mit den Abmessungen 15 x 15 x 3 mm verarbeiten (siehe Abbildung 2). Abbildung 3 zeigt die Messkurve von Beispiel 8 bestimmt mittels der Rheologischen Messmethode im Abgleich mit ihrem theoretischen Verlauf gemäß Formel (V).

In Abbildung 3 bedeuten

Vis = Viskosität [mPa.s]
t = Zeit [sec]
---- = Messkurve
▬ · ▬ = theorethischer Verlauf

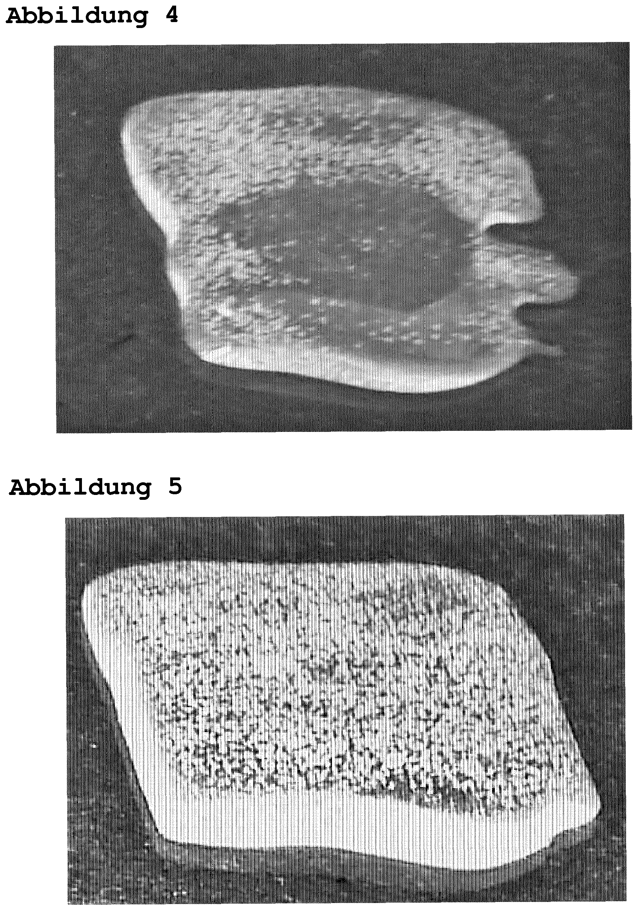

Das Jetting der nicht erfindungsgemäßen Siliconzusammensetzungen lieferte ein unsauberes Druckbild, welches durch eine teilweise unvollständige Trennung der Einzeltropfen verursacht wurde (die Tropfen blieben über dünne Fäden miteinander verbunden, d.h., der Tropfenabriss war unvollständig). Zudem bildeten die auf der Arbeitsfläche auftreffenden Tropfen sehr breite flache Voxel aus, deren Durchmesser ca. 1500 μm betrugen. Infolge dieses Auseinanderfließens während des Drucks konnten feinere strukturelle Details nicht mehr abgebildet werden. Die nicht erfindungsgemäßen Siliconzusammensetzungen neigten zum Verkleben der Düse nach kurzer Zeit, da die Massen auch ohne Drucksignal allein durch den Vordruck in der Kartusche durch das Jetting-Ventil hindurch liefen. Es war kein dauerstabiler DOD-3D-Druck möglich. Stellvertretend für die in den Tabellen 1-4 aufgeführten nicht erfindungsgemäßen Siliconzusammensetzungen zeigen die Abbildungen 4 und 5 die gemäß Beispiel 2 und Beispiel 3 im DOD-Verfahren hergestellten Siliconformkörper.

Beispiel 2 (nicht erfindungsgemäß):

Mit der nicht erfindungsgemäßen Siliconzusammensetzung aus dem Beispiel 2 wurde versucht, durch schichtweisen Aufbau mit simultaner UV-Bestrahlung ein quaderförmiges Siliconelastomerteil mit den Abmessungen 15 x 15 x 3 mm herzustellen.

Bereits die erste Druckschicht zeigte ein unscharfes Druckbild. Während des weiteren Druckprozesses verklebte die Düse vollständig, so dass keine definierten Einzel-Tröpfchen mehr dosiert wurden, sondern die Masse aus der verklebten Jetting-Düse auf dem Bauteil unregelmäßig abgeschieden wurde und ein unförmiges Formteil resultierte. Das Formteil wies außerdem sichtbare Luftblasen auf (siehe weiße Flecken im Formteil in Abbildung 4).

Beispiel 3 (nicht erfindungsgemäß):

Mit der nicht erfindungsgemäßen Siliconzusammensetzung wurde versucht, durch schichtweisen Aufbau ohne UV-Bestrahlung des Grünkörpers ein quaderförmiges Siliconelastomerteil mit den Abmessungen 15 x 15 x 3 mm herzustellen. Hier verklebte die Düse des Jetting-Dosierventils sofort nach Beginn des Druckversuchs vollständig mit der abgeschiedenen Masse. Das weitere Durchfahren des Druckprogramms erzeugte ein unregelmäßiges, unförmiges vernetztes Formteil, welches sichtbare Luftblasen aufwies. Nach Beendigung des Druckprogramms wurde der Grünkörper vernetzt, indem er mit dem BLUEPOINT-Bestrahlungssystem mit einer Leistung von 13.200 mW/cm$^2$ 10 Sekunden lang bestrahlt wurde (erhaltener Formkörper siehe Abbildung 5).

Beispiel 4 (nicht erfindungsgemäß):

Mit der nicht erfindungsgemäßen Siliconzusammensetzung aus Beispiel 4 wurde versucht, durch schichtweisen Aufbau ohne UV-Bestrahlung des Grünkörpers ein halbkugelförmiges Bauteil mit Durchmesser 20 mm auf einem Glasobjektträger abzuscheiden.

Die nicht erfindungsgemäßen Formulierungen führten zu noch schnellerem Austritt der Siliconmassen aus der Düsenöffnung der Jettingdüse. Bereits während der Abscheidung der ersten Schicht bildete sich an der Unterseite des Jetting-Ventils ein Tropfen, welcher sich infolge der aus der Düsenöffnung weiter austretenden Masse weiter vergrößerte. Der Tropfen verschmierte die bereits abgeschiedene Druckschicht. Daraufhin wurde der weitere Druckvorgang abgebrochen.

**Patentansprüche**

1. Vernetzbare Siliconzusammensetzung für den 3D-Druck von Siliconformteilen im ballistischen generativen DOD-Verfahren enthaltend:

(A) 5 bis 60 Gew.-% mindestens eines Organosiliconharzes, aufgebaut aus Einheiten der allgemeinen Formeln

$$R_3SiO_{1/2} \qquad (I),$$

$$R_2SiO_{2/2} \qquad (II),$$

$$RSiO_{3/2} \qquad (III)$$

und

$$SiO_{4/2} \qquad (IV),$$

wobei die Reste R gleich oder verschieden sein können und einen H-, HO- oder einen beliebigen ggf. substituierten 1-40 Kohlenstoffatome enthaltenden Rest bedeuten,
mit der Maßgabe, dass der Gehalt des Siliconharzes an Einheiten der Formel (III) und (IV) mindestens 5 Mol.-% beträgt,
(B) 30 bis 95 Gew.-% mindestens einer Organosiliciumverbindung mit durchschnittlich mindestens zwei aliphatisch ungesättigten Gruppen pro Molekül, mit der Maßgabe, dass ihr Gehalt an T- und Q-Einheiten kleiner 5 Mol.-% beträgt,
(C) 0 bis 30 Gew.-% mindestens einer Organosiliciumverbindung mit durchschnittlich mindestens zwei SiH-Gruppen pro Molekül, mit der Maßgabe, dass ihr Gehalt an T- und Q-Einheiten kleiner 5 Mol.-% beträgt,
oder anstelle von (B) und/oder (C) oder zusätzlich zu (B) und (C)
(D) 0 bis 95 Gew.-% mindestens einer Organosiliciumverbindung mit durchschnittlich mindestens zwei aliphatisch ungesättigten Gruppen und mindestens zwei SiH-Gruppen pro Molekül, mit der Maßgabe, dass ihr Gehalt an T- und Q-Einheiten kleiner 5 Mol.-% beträgt,
wobei die Mengen der Bestandteile (B), (C) oder (D) so gewählt werden, dass stets mindestens ein Bestandteil vorhanden ist, welcher durchschnittlich mindestens zwei aliphatisch ungesättigte Gruppen pro Molekül enthält, und zugleich mindestens ein Bestandteil vorhanden ist, welcher durchschnittlich mindestens zwei Si-gebundene Wasserstoffatome pro Molekül enthält,
(E) 0,1 bis 500 Gew.-ppm mindestens eines Hydrosilylierungskatalysators bezogen auf den Gehalt des Metalls zur gesamten Siliconzusammensetzung,
(F) 0,01 bis 5 Gew.-% eines rheologischen Agens, welches polare Gruppen enthält und ausgewählt wird aus (F1),

(F2) und (F3) sowie deren Mischungen
(F1) Epoxygruppen-funktionellen Verbindungen,
(F2) (Poly)ethergruppen-funktionellen Verbindungen,
(F3) (Poly)estergruppen-funktionellen Verbindungen, wobei die Epoxy- und Ether- und Ester-Gruppen auch in einem einzigen Molekül vorhanden sein können,

(G) 0 bis 30 Gew.-% Hilfsstoffe die sich von (F) unterscheiden,

**dadurch gekennzeichnet, dass**
die Relaxationszeit $\tau$ der Siliconzusammensetzung im folgenden Bereich liegt:

$$0,01 \text{ Sekunden} < \tau \leq 15 \text{ Sekunden}$$

wobei sich $\tau$ aus Formel (V) ergibt:

$$\eta(t) = \eta_{max} + (\eta_0 - \eta_{max}) * EXP(-t/\tau), \qquad (V)$$

wobei

- $\eta(t)$ die Viskosität zum Zeitpunkt t ist,
- $\eta_{max}$ die nach Wegfall der Scherung innerhalb einer vorgegebenen Zeit erzielte maximale Viskosität bezeichnet,
- $\eta_0$ die unmittelbar nach starker Scherung (also zum Zeitpunkt t=0) gemessene Viskosität ist, und
- EXP die e-Funktion bedeutet,

und **dadurch gekennzeichnet, dass**
der den Grad des scherverdünnenden Verhaltens der Siliconzusammensetzung quantifizierende nominelle Fließindex n im folgenden Bereich liegt:

$$-1,00 < n < -0,10$$

wobei sich n aus Formel (VI) ergibt:

$$\log \eta = \log K + n * \log v, \qquad (VI)$$

wobei $\eta$ die Viskosität bei der Scherrate v,
K den nominellen Konsistenzindex,
v die Scherrate und
log den dekadischen Logarithmus darstellt,
und die Bestimmung der Relaxationszeit $\tau$ nach Formel (V), des nominellen Fließindex n sowie des nominellen Konsistenzindex K nach Formel (VI) gemäß der in der Beschreibung offenbarten Rheologischen Messmethode erfolgt.

2. Siliconzusammensetzung gemäß Anspruch 1, **dadurch gekennzeichnet, dass** der Fließindex n der Siliconkzusammensetzung im folgenden Bereich liegt:

$$-0,90 < n < -0,30.$$

3. Siliconzusammensetzung gemäß Anspruch 1, **dadurch gekennzeichnet, dass** der Fließindex n der Siliconzusammensetzung im folgenden Bereich liegt:

$$-0,80 < n < -0,40.$$

4. Siliconzusammensetzung gemäß Anspruch 1, **dadurch gekennzeichnet, dass** die Relaxationszeit $\tau$ im folgenden Bereich liegt:

$$0,1 \text{ Sekunden} < \tau \leq 12 \text{ Sekunden.}$$

5. Siliconzusammensetzung gemäß Anspruch 1, **dadurch gekennzeichnet, dass** die Relaxationszeit $\tau$ im folgenden Bereich liegt:

$$1 \text{ Sekunden} < \tau \leq 9 \text{ Sekunden.}$$

6. Siliconzusammensetzung gemäß einem der Ansprüche 1 bis 5, **dadurch gekennzeichnet, dass** der Gehalt an Einheiten der Formel (III) und (IV) des Siliconharzes (A) mindestens 10 Mol.-% beträgt.

7. Siliconzusammensetzung gemäß einem der Ansprüche 1 bis 6, **dadurch gekennzeichnet, dass** der Gehalt an Einheiten der Formel (III) und (IV) des Siliconharzes (A) höchstens 80 Mol.-% beträgt.

8. Siliconzusammensetzung gemäß einem der Ansprüche 1 bis 7, **dadurch gekennzeichnet, dass** die Siliconharze (A) nur aus Einheiten der Formel (I) und (IV) bestehen.

9. Verfahren zur Herstellung von elastomeren Formkörpern, **dadurch gekennzeichnet, dass** die Formkörper aus den erfindungsgemäßen Siliconzusammensetzungen gemäß den Ansprüchen 1 bis 8 mittels ballistischen generativen DOD-Verfahren (3D-Druck) aufgebaut werden.

10. Verwendung der Siliconzusammensetzung gemäß einer der Ansprüchen 1 bis 8 zur Herstellung von elastomeren Formkörpern mittels ballistischer generativer DOD-Verfahren (3D-Druck).

**Claims**

1. Crosslinkable silicone composition for the 3D printing of silicone moldings by the ballistic generative DOD method, comprising:

    (A) from 5 to 60% by weight of at least one organosilicone resin composed of units of the general formulae

    $R_3SiO_{1/2}$      (I),

    $R_2SiO_{2/2}$      (II),

    $RSiO_{3/2}$      (III)

    and

    $SiO_{4/2}$      (IV),

    wherein the radicals R may be identical or different and denote an H, HO or any desired optionally substituted radical containing from 1 to 40 carbon atoms,
    with the proviso that the content of units of formulae (III) and (IV) in the silicone resin is at least 5 mol.%,
    (B) from 30 to 95% by weight of at least one organosilicon compound having, on average, at least two aliphatically unsaturated groups per molecule, with the proviso that its content of T and Q units is less than 5 mol.%,
    (C) from 0 to 30% by weight of at least one organosilicon compound having, on average, at least two SiH groups per molecule, with the proviso that its content of T and Q units is less than 5 mol.%,
    or instead of (B) and/or (C) or in addition to (B) and (C)
    (D) from 0 to 95% by weight of at least one organosilicon compound having, on average, at least two aliphatically unsaturated groups and at least two SiH groups per molecule, with the proviso that its content of T and Q units is less than 5 mol.%,
    wherein the amounts of constituents (B), (C) or (D) are so chosen that at least one constituent that contains, on average, at least two aliphatically unsaturated groups per molecule is always present, and at the same time at least one constituent that contains, on average, at least two Si-bonded hydrogen atoms per molecule is present,
    (E) from 0.1 to 500 ppm by weight of at least one hydrosilylation catalyst, based on the content of the metal to the total silicone composition,
    (F) from 0.01 to 5% by weight of a rheological agent which contains polar groups and is selected from

    (F1), (F2) and (F3) and mixtures thereof
    (F1) epoxy-group-functional compounds,
    (F2) (poly)ether-group-functional compounds,
    (F3) (poly)ester-group-functional compounds, wherein the epoxy and ether and ester groups may also be present in a single molecule,

    (G) from 0 to 30% by weight auxiliary substances other than (F),

    **characterized in that**
    the relaxation time $\tau$ of the silicone composition lies within the following range:

$$0.01 \text{ second} < \tau \leq 15 \text{ seconds}$$

wherein $\tau$ is given by formula (V):

$$\eta(t) = \eta_{max} + (\eta_0 - \eta_{max}) * EXP(-t/\tau), \qquad (V)$$

wherein

- $\eta(t)$ is the viscosity at time t,
- $\eta_{max}$ denotes the maximum viscosity achieved within a given time after removal of the shear,
- $\eta_0$ is the viscosity measured immediately after intense shear (that is to say at time t=0), and
- EXP denotes the e-function,

and **characterized in that**
the nominal flow behavior index n, which quantifies the degree of shear-thinning behavior of the silicone composition, lies within the following range:

$$-1.00 < n < -0.10$$

wherein n is given by formula (VI):

$$log\ \eta = log\ K + n * log\ v, \qquad (VI)$$

wherein $\eta$ represents the viscosity at shear rate v,
K represents the nominal flow consistency index,
v represents the shear rate, and
log represents the decadic logarithm,

and the determination of the relaxation time $\tau$ according to formula (V), of the nominal flow behavior index n and of the nominal flow consistency index K according to formula (VI) is carried out in accordance with the rheological measuring method disclosed in the description.

2. Silicone composition according to Claim 1, **characterized in that** the flow behavior index n of the silicone composition lies within the following range:

$$-0.90 < n < -0.30.$$

3. Silicone composition according to Claim 1, **characterized in that** the flow behavior index n of the silicone composition lies within the following range:

$$-0.80 < n < -0.40.$$

4. Silicone composition according to Claim 1, **characterized in that** the relaxation time $\tau$ lies within the following range:

$$0.1\ second < \tau \leq 12\ seconds.$$

5. Silicone composition according to Claim 1, **characterized in that** the relaxation time $\tau$ lies within the following range:

$$1\ second < \tau \leq 9\ seconds.$$

6. Silicone composition according to one of Claims 1 to 5, **characterized in that** the content of units of formula (III) and (IV) in the silicone resin (A) is at least 10 mol.%.

7. Silicone composition according to one of Claims 1 to 6, **characterized in that** the content of units of formula (III) and (IV) in the silicone resin (A) is not more than 80 mol.%.

8. Silicone composition according to one of Claims 1 to 7, **characterized in that** the silicone resins (A) consist only of units of formula (I) and (IV).

9. Method for producing elastomeric molded bodies, **characterized in that** the molded bodies are built up from the silicone compositions according to the invention according to Claims 1 to 8 by means of ballistic generative DOD methods (3D printing).

10. Use of the silicone composition according to one of Claims 1 to 8 in the production of elastomeric molded bodies by means of ballistic generative DOD methods (3D printing).

**Revendications**

1. Composition de silicone réticulable pour l'impression 3D de pièces moulées en silicone dans le procédé DOD additif balistique, contenant :

   (A) 5 à 60 % en poids d'au moins une résine d'organosilicone, formée par des unités des formules générales :

   $$R_3SiO_{1/2} \qquad (I),$$

   $$R_2SiO_{2/2} \qquad (II),$$

   $$RSiO_{3/2} \qquad (III)$$

   et

   $$SiO_{4/2} \qquad (IV),$$

   dans lesquelles les radicaux R peuvent être identiques ou différents, et signifient H, HO ou un radical quelconque éventuellement substitué contenant 1 à 40 atomes de carbone,
   à condition que la teneur de la résine de silicone en unités de formule (III) et (IV) soit d'au moins 5 % en moles,
   (B) 30 à 95 % en poids d'au moins un composé d'organosilicium contenant en moyenne au moins deux groupes aliphatiquement insaturés par molécule, à condition que sa teneur en unités T et Q soit inférieure à 5 % en moles,
   (C) 0 à 30 % en poids d'au moins un composé d'organosilicium contenant en moyenne au moins deux groupes SiH par molécule, à condition que sa teneur en unités T et Q soit inférieure à 5 % en moles,
   ou au lieu de (B) et/ou (C) ou en plus de (B) et (C),
   (D) 0 à 95 % en poids d'au moins un composé d'organosilicium contenant en moyenne au moins deux groupes aliphatiquement insaturés et au moins deux groupes SiH par molécule, à condition que sa teneur en unités T et Q soit inférieure à 5 % en moles,
   les quantités des constituants (B), (C) ou (D) étant choisies de sorte qu'au moins un constituant qui contient en moyenne au moins deux groupes aliphatiquement insaturés par molécule soit toujours présent et qu'au moins un constituant qui contient en moyenne au moins deux atomes d'hydrogène reliés à Si par molécule soit simultanément présent,
   (E) 0,1 à 500 ppm en poids d'au moins un catalyseur d'hydrosilylation par rapport à la teneur du métal par rapport à la composition de silicone totale,
   (F) 0,01 à 5 % en poids d'un agent rhéologique, qui contient des groupes polaires et est choisi parmi (F1), (F2) et (F3), ainsi que leurs mélanges,

      (F1) les composés à fonction groupes époxy,
      (F2) les composés à fonction groupes (poly)éther,
      (F3) les composés à fonction groupes (poly)ester, les groupes époxy et éther et ester pouvant également être présents dans une molécule individuelle,

   (G) 0 à 30 % en poids d'adjuvants qui diffèrent de (F),

   **caractérisée en ce que**
   le temps de relaxation τ de la composition de silicone se situe dans la plage suivante :

$$0,01 \text{ seconde} < \tau \leq 15 \text{ secondes}$$

$\tau$ étant donné par la formule (V) :

$$\eta(t) = \eta_{max} + (\eta_0 - \eta_{max}) * EXP(-t/\tau) \quad (V)$$

dans laquelle

- $\eta(t)$ est la viscosité au moment t,
- $\eta_{max}$ est la viscosité maximale obtenue après suppression du cisaillement pendant un temps prédéterminé,
- $\eta_0$ est la viscosité mesurée directement après un cisaillement important (c'est-à-dire au moment t = 0), et
- EXP signifie la fonction e,

et **caractérisée en ce que** l'indice de fluidité nominal n quantifiant le degré de comportement de fluidification sous cisaillement de la composition de silicone se situe dans la plage suivante :

$$-1,00 < n < -0,10$$

n étant donné par la formule (VI) :

$$\log \eta = \log K + n * \log v \quad (VI)$$

dans laquelle $\eta$ représente la viscosité au taux de cisaillement v,
K représente l'indice de consistance nominal,
v représente le taux de cisaillement et
log représente le logarithme décadien,

et la détermination du temps de relaxation $\tau$ selon la formule (V), de l'indice de fluidité nominal n ainsi que l'indice de consistance nominal K selon la formule (VI) a lieu selon la méthode de mesure rhéologique décrite dans la description.

2. Composition de silicone selon la revendication 1, **caractérisée en ce que** l'indice de fluidité n de la composition de silicone se situe dans la plage suivante :

$$-0,90 < n < -0,30.$$

3. Composition de silicone selon la revendication 1, **caractérisée en ce que** l'indice de fluidité n de la composition de silicone se situe dans la plage suivante :

$$-0,80 < n < -0,40.$$

4. Composition de silicone selon la revendication 1, **caractérisée en ce que** le temps de relaxation $\tau$ se situe dans la plage suivante :

$$0,1 \text{ seconde} < \tau \leq 12 \text{ secondes}.$$

5. Composition de silicone selon la revendication 1, **caractérisée en ce que** le temps de relaxation $\tau$ se situe dans la plage suivante :

$$1 \text{ seconde} < \tau \leq 9 \text{ secondes}.$$

**6.** Composition de silicone selon l'une quelconque des revendications 1 à 5, **caractérisée en ce que** la teneur en unités de formule (III) et (IV) de la résine de silicone (A) est d'au moins 10 % en moles.

**7.** Composition de silicone selon l'une quelconque des revendications 1 à 6, **caractérisée en ce que** la teneur en unités de formule (III) et (IV) de la résine de silicone (A) est d'au plus 80 % en moles.

**8.** Composition de silicone selon l'une quelconque des revendications 1 à 7, **caractérisée en ce que** les résines de silicone (A) sont constituées uniquement d'unités de formule (I) et (IV).

**9.** Procédé de fabrication de corps moulés élastomères, **caractérisé en ce que** les corps moulés sont formés à partir des compositions de silicone selon l'invention selon les revendications 1 à 8 par des procédés DOD additifs balistiques (impression 3D).

**10.** Utilisation de la composition de silicone selon l'une quelconque des revendications 1 à 8 pour la fabrication de corps moulés élastomères par des procédés DOD additifs balistiques (impression 3D).

## Abbildung 1

## Abbildung 2

## Abbildung 3

## Abbildung 4

## Abbildung 5

**IN DER BESCHREIBUNG AUFGEFÜHRTE DOKUMENTE**

**In der Beschreibung aufgeführte Patentdokumente**

- WO 2015059502 A1
- WO 2015107333 A1
- DE 102011012412 A1
- DE 102011012480 A1
- DE 102008000156 A1
- DE 102008043316 A1
- DE 102009002231 A1
- DE 102009027486 A1
- DE 102010043149 A1
- WO 2009027133 A2
- EP 0122008 A1
- EP 0561919 B1
- EP 0398701 B1
- EP 0146307 B1
- EP 0358452 B1
- EP 0561893 B1
- EP 1050538 B1
- EP 1803728 B1

**In der Beschreibung aufgeführte Nicht-Patentliteratur**

- **A. GEBHARDT.** Generative Fertigungsverfahren. Carl Hanser Verlag, 2013
- *CHEMICAL ABSTRACTS,* 68083-19-2
- *CHEMICAL ABSTRACTS,* 2530-83-8
- *CHEMICAL ABSTRACTS,* 67746-08-1
- *CHEMICAL ABSTRACTS,* 801307-8
- *CHEMICAL ABSTRACTS,* 78-27-3